# EUROPÄISCHE PATENTANMELDUNG

(11) **EP 3 165 482 A1**
(43) Veröffentlichungstag der Anmeldung: **10.05.2017**
(21) Anmeldenummer: 15003198.7
(22) Anmeldetag: 09.11.2015
(51) Int. Cl.: B65G 47/86, B25J 15/02, B25J 15/12, B65G 47/90

(54) **GREIFER MIT FREI ZUGÄNGLICHER RÜCKSEITE FÜR EINE GEFÄSSHANDHABUNGSVORRICHTUNG, GREIFZANGE, GREIFARM UND TRANSPORTSTERN**

(71) Anmelder: Liese GmbH, 75045 Walzbachtal (DE)
(72) Erfinder: Liese, Frank, D-76327 Pfinztal (DE); Schreiber, Tobias, D-75045 Walzbachtal (DE)
(74) Vertreter: mepat Patentanwälte

(57) **Zusammenfassung**

Die vorliegende Erfindung betrifft einen Greifer (1) für eine Gefäßhandhabungsvorrichtung, der einen Greifarmträger und eine oder mehrere Greifzange(n) mit jeweils zwei Greifarmen (2) aufweist. Der Greifer (1) hat eine drehbar gelagerte Steuerwelle (3) mit zumindest einem Nocken (31), der sich gegen die Greifarme (2) abstützt. Dabei bilden zwei planparallel voneinander beabstandete Grundplatten (111,112) das Lager für die drehbar gelagerte Steuerwelle (3). Zwischen den zwei Grundplatten (111,112) erstreckt sich ein flächiges Stegelement (10) als Greifarmträger, wobei eine Fläche des flächigen Stegelements (10) in oder parallel zu einer Symmetrieebene (E) liegt, die senkrecht zu den Grundplatten (111,112) zwischen den Greifarmen (2) der zumindest einen Greifzange verläuft. Darüber hinaus werden ein Transportstern (10), der zumindest einen erfindungsgemäßen Greifer (1) aufweist, und ein Greifarm (2) zur Ausbildung eines Greifers (1), sowie eine Greifzange offenbart.

## Beschreibung

Die nachfolgende Erfindung bezieht sich auf einen Greifer, der eine frei zugängliche Rückseite hat und der für die Bestückung einer Gefäßhandhabungsvorrichtung vorgesehen ist; auf die Greifzange(n) des Greifers selbst und auch auf einzelne Greifarme, sowie auf einen Transportstern, der ebenfalls einer Gefäßhandhabungsvorrichtung zugehört und der mit den erfindungsgemäßen Greifern ausgestattet ist.

Greifer dienen der Zuführung und/oder dem Umsetzen von Gefäßen wie etwa Flaschen oder Dosen usw. von einer Prozessstation zur nächsten. Die Gefäße werden hierbei an einer Rotationsposition eines Transportsterns von Greifern aufgenommen, für einen vorbestimmten Winkelbetrag durch die Bewegung des Transportsterns mitgenommen und dann von den Greifern auf eine Abfördervorrichtung oder an einen nachgeschalteten Transportstern übergeben. Insofern sind Greifzangen und Transportstern also Bestandteile einer Gefäßhandhabungsvorrichtung, die verschiedenen Zwecken wie dem Etikettieren, Verschließen etc. von Gefäßen dienen kann.

Der Greif- und Öffnungsvorgang der Greifer an der/den vorgegebenen Rotationsposition(en) des Transportsterns wird in der Regel durch ortsfeste Auslöseorgane gesteuert, die an einer Maschinenbasis vorliegen und die auf ein Steuerelement am Greifer einwirken. Als Auslöseorgane kommen etwa eine Steuerkurve mit kontinuierlich veränderlicher Kontur, Rollen, oder Nocken bzw. Umwerfer, die an diskreten Rotationspositionen angebracht sind und auf die Steuerungsvorrichtung der Greifer einwirken, in Frage. Die Aufbringung der Schließkraft kann aktiv durch Einwirkung der Auslösevorrichtung auf die Steuerelemente der Greifer oder passiv durch elastische Elemente, etwa Federn oder Elastomerelemente, deren Ausdehnung durch die Einwirkung des Steuerorgans auf die Steuerungsvorrichtung des Greifers freigegeben wird, erfolgen. Ebenso können Auslöseorgane pneumatisch oder elektromagnetisch in Position gebracht bzw. entfernt werden, um wahlweise zu schalten oder nicht.

Ein solcher Transportstern, bei dem die Greifarme zwangsgesteuert durch eine Steuerwelle betätigt werden, ist aus der DE 296 02 798 U1 bekannt. Der Transportstern dort weist zwei planparallel beabstandete und konzentrisch zueinander angeordnete Tragringe auf. Normal zu den Tragringen sind paarweise Bolzen angeordnet, die jeweils eine Drehachse für einen Greifarm bilden. Zwischen zwei zugeordneten Greifarmen, die eine Greifzange bilden, ist eine Druckfeder angeordnet, die zum Öffnen vorgesehen ist. Normal zu den Tragringen ist pro Greifzange eine Steuerwelle drehbar gelagert, die das Steuerelement für die Bewegung der Greifarme ist; die Nockenbewegung wird auf ein radial nach innen ragendes freies Ende eines Greifarms übertragen, der wiederum über ein Getriebe die Bewegung zwangsgekoppelt an den zweiten Arm überträgt. Der Tragstern dort kann ferner auf verschiedene Gefäßgrößen adaptiert werden, indem die Nockenwellen aller Greifer um einen vorbestimmten Betrag in Umfangsrichtung der Tragringe verdreht wird, wodurch der Ruhestellung der Greifarme bei maximalem Nockenhub ein "Offset" aufgeprägt wird.

Dort wird über die Steuerwelle direkt der Schließvorgang der Greifarme bewirkt, die Schließkraft ist nicht begrenzt. Wenn ein zu transportierendes Gefäß sich verklemmt oder Fremdkörper zwischen die Greifer kommen, treten hohe Kräfte auf, die zur Beschädigung des zu greifenden Gegenstandes oder des Greifers führen können. Es ist nicht vorgesehen, bei dem Transportstern dort kaputte Greifarme der Greifer einzeln auszutauschen. Bei Verschleiß der Backen, Greifarmführungslagerung u. ä. wird der Transport-stern geöffnet, was mit Standzeiten verbunden ist.

Greifarme, die paarweise in einer Baueinheit vorliegen, die als ganzes austauschbar ist, wurden durch DE 203 05 988 U1 beschrieben. Die Greifarme erstrecken sich dort von ihrer Schwenkachse ein Stück weit radial nach innen und ein einziges Federelement ist zwischen gegenüberliegenden Armen angeordnet. Dieses ist dazu vorgesehen, die Arme in ihre Greifstellung zu überführen Offenstellung wird mittels einer Steuerwelle erreicht, die in dem Zentralkörper gelagert ist und auf deren Nocken die Greifarme jeweils mit entsprechenden Ansatzflächen anliegen. Die Greifkraft wird durch die Federn erreicht; die Steuerwelle definiert lediglich den maximalen möglichen Schließwinkel. Die Greifarme sind ferner untereinander durch ein StirnradGetriebe gekoppelt, um eine unsymmetrische Bewegung der Greifarme zu verhindern. Die Steuerwelle ist an ihrem freien Ende drehfest mit einem Steuerelement verbunden, das an diskreten Rotationspositionen des Tragrings in Eingriff mit einem ortsfesten an dem Tragring vorhandenem Steuerstift tritt. Die Greifarmbewegung muss aufwändig synchronisiert werden.

Ohne Synchronisierung bei reproduzierbarem Greifen kommen die Greifer aus, die in EP 2 343 255 A1 beschrieben sind. Der Greifer dort hat eine Positioniervorrichtung für das zu greifende Objekt, die dazu dient, das zu greifende Objekt in der Greifstellung zu zentrieren. Die Positioniervorrichtung hat zwei oder mehr Anschläge, die zwischen den Greifarmen angeordnet sind und bevorzugt oben und unten an dem Gefäß anliegen. Die Anschläge haben hierbei eine Kontur, die der Außenkontur des zu greifenden Gegenstandes nachempfunden ist. Der dort beschriebene Greifer ist nur für jeweils vorbestimmte Gefäßformate geeignet, wenn nicht die Positioniervorrichtung umgebaut werden soll.

Auch die EP 2 774 877 A1 offenbart eine Greifvorrichtung zum Greifen und Halten von Flaschen, Dosen oder dergleichen Flüssigkeitsbehältern, einen Transportstern mit einer solchen Greifvorrichtung und ein zugehöriges Herstellungsverfahren. Die Greifvorrichtung hat wenigstens ein Greifarmpaar und ein Betätigungsmittel zum Öffnen und Schließen des Greifarmpaares, wobei das Betätigungsmittel eine Steuerwelle umfasst, die an einem Grundelement drehbar gelagert ist. Das Grundelement ist dort als Blechteil mit U-förmigem Profil ausgebildet.

Weiter ist die Gestaltung der Greifer mit der Konstruktion der Transportster-ne korreliert: Bekannte Transportsterne sind dazu ausgelegt, in einer einzigen Drehrichtung betrieben zu werden, da die Steuerelemente bzw. Mitnehmer für genau eine Drehrichtung konstruiert sind. Sie müssen vor einem Richtungswechsel zumindest umgedreht werden.

Ausgehend von diesem Stand der Technik liegt der vorliegenden Erfindung die Aufgabe zu Grunde, einen hinsichtlich seiner Zugänglichkeit verbesserten Greifer für eine Gefäßbearbeitungsvorrichtung zu schaffen, der zugleich ein weiter verbessertes zentriertes Greifen ohne Positioniervorrichtung für flexible Gefäßformate ermöglicht.

Diese Aufgabe wird durch einen Greifer für eine Gefäßbearbeitungsvorrichtung mit den Merkmalen des unabhängigen Anspruchs 1 gelöst.

Schließlich ergibt sich die Aufgabe, einen hinsichtlich der Wartungszeiten und Hygiene verbesserten Transportstern zu schaffen.

Diese Aufgabe wird durch einen Transportstern mit den Merkmalen des Anspruchs 17 gelöst.

Darüber hinaus ergibt sich die Aufgabe, verbesserte Greifarme und auch eine verbesserte Greifzange zu schaffen.

Diese Aufgabe wird durch die Greifarme mit den Merkmalen des unabhängigen Anspruchs 19 und die Greifzange mit den Merkmalen des Anspruchs 21 gelöst.

Weiterbildungen der Vorrichtungen werden jeweils durch die Unteransprüche beschrieben.

Der erfindungsgemäße Greifer für eine Gefäßhandhabungsvorrichtung hat in einer ersten Ausführungsform einen Greifarmträger und zumindest eine Greifzange mit zwei Greifarmen, sowie eine drehbar gelagerte Steuerwelle mit einem oder mehreren Nocken, der bzw. die sich gegen die Greifarme abstützt bzw. abstützen; soweit sind derartige Greifer aus dem Stand der Technik bekannt. Vorteilhaft bilden aber zwei planparallel voneinander beabstandete Grundplatten das Lager für die drehbar gelagerte Steuerwelle, die wenigstens eine Vorrichtung mit Nockenfunktion trägt, und zwischen den beiden Grundplatten erstreckt sich ein flächiges Stegelement als Greifarmträger. Das Besondere hieran ist, dass die Fläche des flächigen Stegelements in oder parallel zu einer Symmetrieebene liegt, die senkrecht zu den Grundplatten zwischen den Greifarmen der Greifzange(n) verläuft. Damit ergibt sich der Vorteil, dass die Greifarme der Greifzange an ihrer Rückseite frei zugänglich sind und im Falle eines Crashs mit minimalistischem Aufwand demontiert werden können, was die Ausfallzeit der Maschine reduziert. Ein weiterer, sehr erheblicher Vorteil dieser Bauweise ist ferner, dass die Greifer, die insbesondere in der Getränkeindustrie eingesetzt werden, die besondere Hygienevorschriften mit sich bringt, auf deutlich einfachere Weise sauber gehalten werden können, als beispielsweise Greifer, die an ihrer rückwärtigen Seite ein geschlossenes Profil aufweisen.

"Rückwärtige Seite" meint hierin die Seite der Greifer, die in einem Montagezustand an einem Transportstern in dessen Richtung zeigt.

Ferner bezieht sich "Symmetrieebene, die senkrecht zu den Grundplatten zwischen den Greifarmen der zumindest einen Greifzange verläuft..." auf eine in der Vertikalen liegenden Ebene, die sich quasi längs und durch die Drehachse der Steuerwelle erstreckt. Und unter "Gefäßhandhabungsvorrichtung" wird hierin eine Handhabungsvorrichtung für linearen oder umlaufenden Transport der Gefäße verstanden, Insbesondere ein Transportstern. "Gefäße" können dabei Flaschen und Dosen, aber auch Tuben oder Eimer mit unterschiedlichen Formen sein. Die "Greifarme" umgreifen einen Gefäßabschnitt. Bei einer Flasche kann dies ein Flaschenkopf, Flaschenhals und/oder Flaschenbauch sein.

Gemäß einer erfindungsgemäßen Ausführungsform können die Greifarme, die jeweils einen Schwenkabschnitt und einen Greifabschnitt aufweisen integral resp. einstückig in Bezug auf diese beiden Abschnitte ausgebildet sein. "Schwenkabschnitt" meint dabei den Abschnitt des Greifarmes, an dem der Greifarm befestigt ist und auf den eine Kraft einwirkt, um den Greifarm in eine Offen- und eine Geschlossenstellung zu bringen, wohingegen "Greifabschnitt" den Abschnitt meint, dessen Hauptfunktion das Umfassen und damit Greifen des handzuhabenden Gefäßes ist.

Die Greifarme sind dabei so über den Schwenkabschnitt an dem flächigen Stegelement abgestützt und daran befestigt, dass sie durch die Krafteinwirkung eines Nocken der Steuerwelle einfach nach außen aufgespreizt oder aufgebogen werden. Besonders von Vorteil ist bei dieser Ausführungsform, dass durch die Fertigung beider Abschnitte Schwenkabschnitt und Greifabschnitt Montageschritte überflüssig sind, die andernfalls für die Verbindung der beiden Abschnitte aus separaten Bauteilen erforderlich werden.

In einer noch weiteren Ausführungsform weisen diese einstückigen Greifarme an ihrem jeweiligen Schwenkabschnitt einen Federabschnitt auf, der das Aufspreizen und Rückstellen ermöglicht, wenn der Greifarm von einer Offenstellung in eine Geschlossenstellung und umgekehrt bewegt wird. Der Federabschnitt kann insbesondere eine Art Blattfederabschnitt sein; also ein flächiges Blech- oder Stahl- oder auch, ggfs. faserverstärktes, Kunststoffblatt mit entsprechenden Materialeigenschaften; er weist an seinem freien Ende in der Blattebene eine Umbiegung derart auf, dass der Greifarm über diese Umbiegung an dem flächigen Stegelement anliegt, abgestützt ist und mit Befestigungsmitteln daran befestigt werden kann.

Lösbare Befestigungsmittel sind hierbei von besonderem Vorteil, da der Greifarm ja im Falle, dass es erforderlich ist, durch die erfindungsgemäße hinten offene Gestaltung des Greifers mit dem Stegelement leicht zugänglich ist und daher ohne weiteres ausgetauscht werden kann, wenn die Befestigung bspw. mittels Schraube und entsprechenden Schraublöchern in der Umbiegung und in dem Stegelement hergestellt wird. Vorteilhaft können so übrigens die beiden paarigen Greifarme einer Greifzange mit gemeinsamen Schrauben an dem Stegelement befestigt werden.

Durch diese Ausgestaltung des Greifarms können vorteilhaft besonders hohe Hygieneansprüche befriedigt werden, da durch das Integrieren einer Federfunktion in den Greifarm selbst und den damit verbundenen Wegfall weiterer Federelemente, die andernfalls für das Öffnen und Schließen einer Greifzange nötig sind, die Anzahl der Schmutz aufnehmenden Bauteile im Greifer reduziert und zugleich eine verbesserte Reinigungsmöglichkeit des Greifers geschaffen werden.

Der erfindungsgemäße Greifer weist in einer weiteren Ausführungsform, die ebenfalls auf der Variante mit den einstückigen Greifarmen basiert, noch weitere Vorteile auf: Erfindungsgemäß kann der Schwenkabschnitt an seinem zu dem Greifabschnitt weisenden Ende eine S-förmige Kontur aufweisen, die eine Steuerkurve mit einem Endanschlag für die Vorrichtung mit Nockenfunktion bildet. Die Vorrichtung mit Nockenfunktion kann natürlich einfach ein Nocken sein, oder aber, vorzugsweise gerade bei der einstückigen Ausführungsform der Greifarme, eine auf der Steuerwelle sitzende, als Lager fungierende Nocke, die für jeden Greifarm eine Rolle oder Walze oder Kugel zu dem zugehörigen Greifarm weisend lagert, um materialabhängige starke Reibung durch Rollen zu ersetzen. Die Vorrichtung mit Nockenfunktion kann auch eine auf der Steuerwelle sitzende Nocke umfassen, auf der eine an jedem der paarigen Greifarme angeordnete, drehbar gelagerte Rolle oder Walze oder Kugel zur Zusammenwirkung mit dem Nocken abrollt.

Die Vorrichtung mit Nockenfunktion, die der entsprechenden Greifzange zugeordnet ist, und die zwischen den beiden S-förmigen Konturen der Schwenkabschnitte der beiden paarigen Greifarme reibgelagert ist, wird dabei entlang der Steuerkurve geführt. Da diese durch die S-Form in Richtung des Federabschnitts eine Verengung in Bezug auf die Greifzangenbreite bildet, wird so zugleich ein Anschlag gebildet. Vorteilhaft entfällt bei dieser Gestaltung auch das Erfordernis eines Nockenfolgers.

Bei der Ausführungsform des Greifers mit den einstückig gefertigten Greifarmen kann sogar die gesamte Greifzange mit zwei Greifarmen einstückig ausgebildet sein, indem ein Verbindungsabschnitt wie bspw. ein u-förmiger Verbindungsabschnitt die Federabschnitte der beiden Greifarme verbindet.

In einer weiteren, alternativen Ausführungsform des erfindungsgemäßen Greifers sind die Greifarme zumindest zweiteilig mit einem Schwenkabschnitt und einem Greifabschnitt ausgebildet. Dieser Greifer weist eine Federanordnung aus zumindest zwei Federelementen auf, die zur Ausübung der Schließkraft zwischen den beiden Schwenkabschnitten paariger Greifarme angeordnet sind Dabei bildet das flächige Stegelement für die entsprechend paarigen Federelemente einen Federsitz. Optional kann zur Verbesserung der Aufnahme des Federelements das Stegelement auch eine an die Federelement-Geometrie angepasste Vertiefung, z. B. einen Federteller, haben. Es ergibt sich, dass sich von dem Federsitz aus jeweils zumindest einer Feder zum Schwenkabschnitt jedes Greifarms einer Greifzange erstreckt.

Die Federelemente sind Druckfederelemente wie etwa Schraubenfedern, oder andere, dem Fachmann geeignet erscheinende Federn, etwa Elastomerelemente, Luftfederelemente, Tellerfedern, Evolutfedern. Die Federn können in Reihe oder parallel zugeordnet sein.

Auch dieser Ausführungsform der Greifarme mit getrennt voneinander gefertigtem Greifabschnitt und Schwenkabschnitt liegt die Schwenkachse am Ende des Schwenkabschnitts vor.

Da der Federsitz zwischen den Greifarmen, also bspw. auf einer Winkelhalbierenden der beiden Greifarme in Ruhestellung angeordnet ist, ergibt sich bei gleichen Federsteifigkeiten der beiden Federelemente vorteilhaft eine kraftgesteuerte Synchronisierung der Greifarmbewegung. Anders als bei bekannten Greifern, die auch über Federelementen geschlossen werden, wird dies erfindungsgemäß vorteilhaft dadurch ermöglicht, dass pro Greifarm eben mindestens ein Federelement eingesetzt wird, das so ausgebildet ist wie das Federelement des zugehörigen paarigen Greifarms.

Damit ergibt sich vorteilhaft ein doppelter Nutzen des Stegelements, das sowohl die Greifer trägt, als auch den Federsitz bildet - hierdurch wird die Konstruktion an sich weiter vereinfacht, selbst wenn in dieser Variante nicht Federn und Greifarme einstückig gebildet sind. Auch in dieser Ausführungsform des erfindungsgemäßen Greifers bleibt die vorteilhafte freie Zugänglichkeit der Greifarme einzeln und von der rückwärtigen Seite - die ja die Montageseite ist - gegeben. Dazu kommt, dass trotz der Federn, die an sich Elemente sind, die Schmutz aufnehmen, die Sauberhaltung durch die offene Rückseite vereinfacht wird. Außerdem ist es auch möglich, ohne aufwändigen Montageaufwand die Federn im Sitz auszutauschen.

Vorteilhaft braucht der erfindungsgemäße Greifer kein Getriebe zur Synchronisierung der Greiferbewegung und kann daher deutlich kostengünstiger hergestellt werden als bekannte synchronisierte Greifer. Bekannte Synchronisierungstriebe sind in der Herstellung teuer, während Federn als Standardteil kostengünstig verfügbar sind.

Die Federelemente des erfindungsgemäßen Greifers dienen dem Schließen der Greifarme, während die Steuerwelle lediglich den maximal möglichen Schließwinkel vorgibt. Die Federelemente sind entsprechend dem Gewicht der Gefäße ausgelegt; der Fachmann ist mit der Zuordnung der Federkennlinien entsprechend der zu erwartenden Durchmesser und Masseunterschiede der zu greifenden Gefäße vertraut. Es können, wenn über einen vergleichsweise großen Durchmesserbereich quasi konstante Greifkräfte nötig sind, auch Federelemente mit degressivem Kennlinienverlauf eingesetzt werden.

Wenn es sinnvoll erscheint, können die zwei zugeordneten Greifarme einer Greifzange auch mit jeweils einem Nocken gesteuert werden, um so einen zeitlichen Versatz der Greifarmbewegung innerhalb einer Greifzange zu ermöglichen.

Der Greifer kann ferner ein Steuerelement aufweisen, das drehfest mit der Steuerwelle verbunden ist und das zur Drehmomenteinleitung in die Steuerwelle mittels einer Auslösevorrichtung einer vorgegebenen Gefäßhandhabungsvorrichtung ausgebildet ist. Ein geeignetes, erfindungsgemäßes Steuerelement ist ein Steuerkreuz aus zwei gestapelten länglichen Kontaktkörpern, die jeweils drehfest mit der Steuerwelle verbunden sind. Die Kontaktkörper sind hierbei vorteilhaft zentrisch auf der Steuerwelle befestigt.

Durch die zentrische bzw. symmetrische Befestigung der Kontaktkörper auf der Steuerwelle wird ermöglicht, die Gefäßhandhabungsvorrichtung, in der der erfindungsgemäße Greifer eingesetzt wird, in beiden Drehrichtungen zu betreiben, ohne dass das Steuerelement umgebaut werden muss. Hierdurch wird eine erhöhte Flexibilität der Gefäßhandhabungsvorrichtung ermöglicht, die auch ein Umstellen des Produktionsprozesses, insbesondere das Einfügen weiterer Bearbeitungsstationen, ohne weiteres ermöglicht. Darüber hinaus kann der erfindungsgemäße Greifer dadurch ohne Änderungen für links- und rechtsdrehende Transportsterne verwendet werden; Beschädigungen durch "Rückwärtsdrehen" werden vermieden. Durch den Einsatz von zwei angular versetzten Kontaktkörpern wird zudem ermöglicht, den Greifer als Refit-Bauteil für eine Vielzahl existierender Gefäßhandhabungsvorrichtungen einzusetzen; die Geometrie sowie Höhen- und Winkelpositionierung der Kontaktkörper muss hierzu lediglich an vorgegebene Schnittstellenparameter angepasst werden.

Die Kontaktkörper können geeigneter Weise quaderförmig sein; günstig ist, wenn ihre Stirnflächen, bevorzugt auch andere Flächen, eine konvexe Krümmung aufweisen. Alternativ oder zusätzlich kann das Steuerelement lösbar mit der Steuerwelle verbunden sein, wodurch es ermöglicht wird, das Steuerelement auszutauschen und/oder ein anderes Steuerelement zu montieren. Durch die konvexe Krümmung läuft der Greifer homogen in dem Transportstern bei, da ruckartige Bewegungen des Steuerelements weitgehend vermieden werden und die Kontaktkörper zeigen einen verringerten Verschleiß, da hohe Flächenpressungen vermieden werden.

Der Greifer mit der einteiligen Greifarmvariante kann ferner eine Synchronisierungsvorrichtung haben, die der verbesserten Führung und Stabilisierung der Steuerwelle dient und aus einem Umgriffelement und einem Hilfsnocken besteht. Der Hüfsnocken sitzt dabei vorzugsweise steuerkreuzseitig zwischen einer der Grundplatten und einem ersten Nocken drehfest auf der Nockenwelle. Das Umgriffelement ist ein J-förmiges Umgriffblech, der das Stegelement von dessen rückwärtiger Seite umgreift und an diesem festgelegt ist und das einen langen Schenkel hat, der an dem Hilfsnocken anliegt. Kommt es nun dazu, dass beim Greifen eines Gefäßes wie einer großen Flasche, die Nocken oder entsprechenden Elemente Spiel haben und die Steuerwelle dann Freilauf hat, aber sicher gestellt werden soll, dass bei eventueller Berührung des Steuerkreuzes oder auf andere Weise die Greifarme sich nicht verändern, sondern in der gewünschten ausgelenkten Position verbleiben, so wirkt der lange Schenkel des J-förmigen Umgriffblechs auf den Hilfsnocken und bewirkt, dass unerwünschtes Verdrehen verhindert wird.

Der Greifer mit der zweiteiligen Greifarmvariante kann ebenfalls eine Synchronisierungsvorrichtung haben, die anders konzipiert ist, aber die identische Wirkung zeigt. Diese besteht aus einem Magnetelementepaar, wobei das eine Magnetelement an einer nach innen weisenden Seite einer der Grundplatten angeordnet ist und die Steuerwelle zumindest teilweise umgibt und mit dem anderen in Magnetkontakt steht. Das andere Magnetelement sitzt drehfest auf der Steuerwelle. Hat diese nun aus o. g. Grund zuviel Spiel, hält der entsprechend positionierte Magnet an der Grundplatte den zweiten Magneten und damit die Steuerwelle in der ausgelenkten Position, wenn Kräfte tangential auf diese einwirken.

Der Greifer kann zwei oder mehr Greifzange(n) jeweils einer der beiden Varianten aufweisen, die planparallel beabstandet von der ersten Greifzange in dem Greifarmträger gelagert ist/sind. Die weitere(n) Greifzange(n) sind hierbei nicht mit der ersten Greifzange gekoppelt, so dass die Greifzangen unabhängig voneinander beweglich sind, was es ermöglicht, mit den Greifzangen Gefäßabschnitte mit unterschiedlichen Durchmessern (unterschiedliche Gefäßformate) zu greifen, so etwa mit einer in einer Einbausituation unten liegenden Greifzange einen Flaschenbauch und mit einer oben liegenden Greifzange einen Flaschenhals.

Generell können die Greifzangen in der insgesamt einstückigen Fertigungsweise auch als ganze ersetzt werden.

Bei den beiden planparallel beabstandeten Grundplatten, in denen die Steuerwelle drehbar gelagert ist, kann es sich vorteilhaft um ebenensymmetrische Gleichteile handeln, wodurch die Teileanzahl des erfindungsgemäßen Greifers reduziert wird. Die Grundplatten weisen, je nach Greifertyp mit ein- oder mehrteiligen Greifarmen, bspw. Aufnahmen für die Schwenkachsen oder Befestigungsvorrichtungen zur Befestigung der Grundplatte an einem Transportstern auf, und können zudem jeweils einen Schlitz aufweisen, der symmetrisch zwischen den Greifarmen vorliegt.

In den Schlitzen ist das Stegelement so aufgenommen, dass es sich zumindest über den Schlitz der zu einem Transportstern weisenden Grundplatte hinaus erstreckt und in einen korrespondierenden Schlitz des Transportsterns eingeführt werden kann.

Gemäß einer weiteren Ausführungsform kann sich ein dem Steuerelement abgewandtes Ende der Steuerwelle über den Greifarmträger hinaus erstrecken, wobei dieses abgewandte Ende der Steuerwelle identisch mit dem Steuerelement-Ende ausgebildet ist. Das abgewandte Ende der Steuerwelle kann auch mit einer Abdeckkappe abgedeckt sein. Das Steuerelement kann erfindungsgemäß von dem einen Wellenende getrennt werden und an dem anderen angebaut werden; sozusagen wird das Steuerelement-Ende hierdurch zum abgewandten Ende und umgekehrt. Hierdurch wird ermöglicht, den Greifer in Transportsternen einzusetzen, bei denen die Auslösevorrichtung oben oder unten liegt; der erfindungsgemäße Greifer ist somit sehr flexibel einsetzbar; insbesondere auch im Refit.

Um einen Transportstern von einer Ansteuerung von oben auf eine Ansteuerung von unten oder umgekehrt umzubauen, genügt es, die Steuerungsvorrichtung auf das andere Ende der Steuerwelle zu setzen.

Weiter können in einer Ausführungsform, bei der die Greifarme wenigstens zweiteilig sind, resp. zwei Abschnitte haben, über ein Überlastgelenk verbunden sein, das bei Überschreiten eines vorbestimmten Moments zumindest einen Bewegungsfreiheitsgrad freigibt, oder alternativ zur Erfüllung dieser Aufgabe eine Sollbruchstelle aufweisen. Diese Bauweise erlaubt, statt Metall auch Kunststoffe und Kohlefaserverbundwerkstoffe zu verwenden, die keine oder kaum Flexibilität aufweisen; hier kann insgesamt eine Leichtbauweise gewählt werden. Der Greifabschnitt kann bei diesen kostengünstig fertigbaren Greifarmen direkt der zu umfassenden Gefäßform abgeformt sein. Der Greifarm ist dabei nicht ein flächiges oder Blattelement, sondern hat in dem Bereich, in dem der Greifabschnitt in den Schwenkabschnitt übergeht, etwa einen quadratischen Querschnitt und erlaubt insofern auch die Anordnung von einem Nockenfolger auf der Ober- oder Unterseite.

Im genannten Übergangsbereich kann dann etwa eine Sollbruchstelle vorliegen, oder die beiden Abschnitte werden dort derart miteinander verbunden, dass im Crashfall hier der Greifarm bricht. Diese Funktion wird unter dem Aspekt "Crash-Sicherheit" gesehen.

Es kann alternativ an dieser Stelle auch ein Überlastgelenk vorgesehen werden: Das Überlastgelenk schafft hierbei die Möglichkeit, dass der erste Teil bei Überlast, beispielsweise bei einer Kollision mit einem verklemmten Gefäß oder einem nachgeschalteten Greifer, nach Erreichen einer definierten Auslösekraft bzw. eines definierten Auslösemoments am Gelenk auszurasten und Verformungen bzw. Beschädigungen zu verhindern.

Wenn gewunscht, kann das freie Greiferarmende eine Überzugskappe aufweisen, die austauschbar über das Greifende gezogen ist und die am freien Ende eine Noppe oder eine sich parallel zu der Schwenkachse erstreckende Rippe haben kann, um die Griffigkeit zu verbessern. Durch die Noppen bzw. Rippen wird auch sichergestellt, dass Behälter unterschiedlicher Durchmesser ohne Umstellung gegriffen werden können und die Längsachsen der Behälter exakt auf dem Teilkreisdurchmesser des Transportsternes gehalten werden können, was für die Übergabe an nachgeschaltete Abfördereinrichtungen und/oder Transportsterne wichtig ist. Die Überzugskappe ist hierbei als Verschleißteil vorgesehen, die, um die eigentlichen Greifarme zu schonen, in regelmäßigen Abständen ausgetauscht werden kann. Die Noppen und/oder Rippen dienen dazu, das zu greifende Gefäß an definierten reproduzierbaren Positionen zu fassen und die Sicherheit gegen Herausrutschen aus dem Zangengriff auch bei feuchter Oberfläche sicherzustellen. Die Überzugskappe(n) können auch mit der Außenform des zu greifenden Gefäßes korrespondieren, um auch normal zur Längsachse des Gefäßes eine sichere Aufnahme zu ermöglichen.

Der Greifabschnitt der Greifarme nach der ersten Variante (integrale Ausbildung von Greif- und Schwenkabschnitt) kann im Übrigen auch unterschiedliche Ausgestaltungen aufweisen. Diese Ausführungsform eignet sich sehr für die Fertigung aus Metall und daher können, wie oben beschrieben, bestimmte Funktionalitäten bereits durch Formen des blatt- oder bandförmigen Metallstreifens bei der Fertigung der Greifarme eingebracht werden. Durch Faltungen oder Einwölbungen können dem Metall im Bereich des Greifabschnittes Dämpfungseigenschaften verliehen werden, was es ermöglicht, Gefäße unterschiedlicher Umfänge in gewissen Toleranzbereichen mit ein und demselben Greifarm sicher zu fassen.

In dem Greifabschnitt selbst kann aber auch entlang seiner Längserstreckung eine Ausnehmung vorgesehen sein, in die ein Federelement eingebracht wird, das in die Greifebene ragt und beim Fassen eines Gefäßes durch den auf das Federelement ausgeübten Druck das sichere Halten verstärkt. Ein solches Federelement kann auch aus dem Metallblatt selbst angeschnitten werden.

Bei dem oben dargelegten Nockenfolger, an dem der Nocken der Steuerwelle anliegt, kann es sich um eine drehbar gelagerte Rolle oder eine Fläche mit einer gleitmindernden und/oder verschleißfesten Beschichtung handeln. Der Nockenfolger kann alternativ auch aus einem trocken-gleitfähigen Material bestehen und/oder zusätzlich mit beschriebener Beschichtung versehen sein.

Der erfindungsgemäße Transportstern weist in einer ersten Ausführungsform eine ortsfeste Maschinenbasis und wenigstens einen rotierbaren Tragring auf. An dem Umfang des Tragrings ist in gleichmäßigen Winkelabständen eine Vielzahl erfindungsgemäßer Greifer angeordnet, wobei die Steuerelemente der Greifer jeweils in die gleiche Richtung weisen. Ferner hat der Transportstern eine oder mehrere zu der Maschinenbasis ortsfeste Auslösevorrichtung(en), die beim vorbei Bewegen der Greifer die Steuerelemente der Greifer betätigt/betätigen. Die Auslösevorrichtung(en) kann/können rein mechanisch, d. h. durch vorbei Bewegen der Greifer an ortsfesten Umwerfern oder aber pneumatisch, elektromechanisch, z. B. elektromagnetisch, oder hydraulisch angesteuert werden.

Dadurch, dass die Greifarme einer Greifzange nicht über ein Getriebe zwangsgekoppelt sind, ist es möglich, dass ein Greifarm einem Fremdköper, der in den Transportstern geraten ist, oder einem falsch zugeführtem Gefäß, ausweichen kann, anstatt zu einem Verklemmen mit anschließendem Produktionsstillstand zu führen, wodurch die Produktion unter Verwendung des erfindungsgemäßen Transportsterns mit weniger Stillstand erfolgen kann als bei Verwendung von bekannten Transportsternen. Auch hat der erfindungsgemäße Transportstern einen verringerten Wartungsaufwand, da die Kopplung der Greifarmbewegung über verschleißfreie Federelemente erfolgt und nicht über ein verschleißendes und ggf. schmierstoffbedürftiges Getriebe; zudem funktionieren die Nockenfolger auch nahezu verschleißfrei. Es kann hierbei sowohl eine hängende als auch eine stehende Anordnung der Greifer vorgesehen sein.

In einer weiteren Ausführungsform kann es sich bei der Auslösevorrichtung um eine Auslösevorrichtung mit kontinuierlicher Auslösecharakteristik, etwa eine Steuerkontur, oder um eine Auslösevorrichtung mit diskreter Auslösecharakteristik handeln. Eine Auslösevorrichtung mit diskreter Auslösecharakteristik kann beispielsweise einen oder mehrere Auslösenocken und/oder Umwerfer aufweisen, der/die dazu ausgebildet ist/sind, das Steuerelement des Greifers zu betätigen. Es kann dabei sowohl vorgesehen sein, dass der Greifer an genau einer Rotationsposition des Transportsterns öffnet oder aber an mehreren Rotationspositionen, beispielsweise um einen Teil der handzuhabenden Gefäße vorzeitig auszuschleusen. Zudem kann vorgesehen sein, dass der Greifer über einen bestimmten Rotationsbereich des Transportrings geöffnet bleibt, was sich entweder durch die Steuerkurve oder durch eine am Greifer vorliegende Sperreinrichtung, die von einer ersten Auslösevorrichtung aktiviert wird und von einer nachfolgenden deaktiviert wird, realisieren lässt.

Der Transportstern kann schließlich auch einen zweiten Tragring haben, der planparallel und konzentrisch beabstandet zu dem ersten Tragring angeordnet sein kann. Der zweite Tragring kann hierbei auch mitbewegt sein oder er kann feststehend ausgebildet sein, wobei an diesem beispielsweise die Auslösevorrichtung(en) angeordnet sein können.

Der erfindungsgemäße Greifarm, der zur paarigen Anordnung mit einem zweiten Greifarm ausgebildet ist, und der sich an einem erfindungsgemäßen Greifer für eine Gefäßhandhabungsvorrichtung anordnen lässt, kann im Übrigen auch an anderen Greifern angeordnet werden.

Er weist einen Schwenkabschnitt und einen Greifabschnitt auf, die integral ausgebildet sind, wobei der Schwenkabschnitt einen Federabschnitt, insbesondere einen Blattfederabschnitt aufweist, der an seinem freien Ende in der Blattebene eine Umbiegung aufweist, die zur Abstützung einer Fläche eines Abstützelementes vorgesehen ist. "Integrale Ausbildung Schwenkabschnitt und einen Greifabschnitt" meint, dass das Bauteil, das diese beiden Funktionen bereitstellt, aus einem Stück, etwa einem Bandmetall gefertigt ist. Dabei wird explizit ermöglicht, dass, etwa im Greifabschnitt, weitere Elemente den Greifarm ergänzen können, wie etwa ein Federelement, das an dem Greifabschnitt angeordnet wird.

Erfindungsgemäß weist in einer bevorzugten Ausführungsform der Schwenkabschnitt an seinem zu dem Greifabschnitt weisenden Ende eine S-förmige Kontur auf, die eine Steuerkurve mit einem Endanschlag für einen vorbestimmten Nocken einer Steuerwelle bildet, der zwischen den beiden S-förmigen Konturen der Lagerabschnitte zweier paarig angeordneter Greifarme reibgelagert anordenbar ist.

Ergänzend wird dargelegt, dass der Inhalt der DE 10 2014 000 851 vollumfänglich durch Verweis in diese Anmeldung einbezogen wird.

Die oben stehenden und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Die Figuren sind lediglich schematische Darstellungen von Ausführungsbeispielen der Erfindung. Es zeigen:
- **Fig 1**: eine perspektivische Ansicht eines Greifers aus dem Stand der Technik,
- **Fig 2**: eine perspektivische Ansicht eines erfindungsgemäßen Greifers mit geschlossenen Greifarmen der einstückigen Variante.
- **Fig 3**: eine perspektivische Ansicht des Greifers aus Fig. 2 mit geöffneten Greifarmen,
- **Fig 4**: eine Draufsicht auf den Greifer aus Fig. 2 ohne Steuerelement,
- **Fig 5**: eine Draufsicht auf den Greifer aus Fig. 4 mit geöffneten Greifarmen,
- **Fig 6**: eine perspektivische Ansicht des an einem Transportstern angeordneten Greifers aus Fig. 3 mit geöffneten Greifarmen,
- **Fig 7**: eine zu Fig. 6 alternative perspektivische Ansicht des an einem Transportstern angeordneten Greifers aus Fig. 3 mit geöffneten Greifarmen,
- **Fig 8**: eine Draufsicht auf den an einem Transportstern angeordneten Greifer aus Fig. 6 oder 7 ohne Steuerelement mit geöffneten Greifarmen,
- **Fig 9**: eine Draufsicht auf an einem Transportstern angeordnete Greifer mit geöffneten Greifarmen und einem dazwischen angeordneten Gefäß,
- **Fig 10**: eine Teil-Schnittansicht von oben auf den an einem Transportstern angeordneten Greifer mit Gefäß aus Fig. 9,
- **Fig 11**: eine Unteransicht auf den an einem Transportstern angeordneten Greifer mit Gefäß aus Fig. 9,
- **Fig 12**: eine perspektivische Ansicht eines an einem Transportstern angeordneten Greifers mit Gefäß,
- **Fig 13**: eine Teil-Schnittansicht von oben entsprechend Fig. 10 mit geschlossenen, das Gefäß haltenden Greifarmen,
- **Fig 14**: eine Draufsicht auf einen an einem Transportstern angeordneten Greifer mit geschlossenen Greifarmen ohne Gefäß und ohne Steuerelement,
- **Fig 15**: eine Seitenansicht von links auf den an einem Transportstern angeordneten Greifer aus Fig. 6 oder 7,
- **Fig 16**: eine Seitenansicht von rechts auf den an einem Transportstern angeordneten Greifer aus Fig. 6 oder 7
- **Fig 17**: eine perspektivische Ansicht eines Greifers mit alternativ ausgeführten Griffabschnitten und mit Steuerelement unten,
- **Fig 18**: eine perspektivische Ansicht des Greifers aus Fig. 17 mit Steuerelement oben,
- **Fig 19**: eine perspektivische Ansicht von oben auf einen alternativ ausgeführten Greifer mit der zweiteiligen Greifarmvariante,
- **Fig 20**: eine perspektivische Ansicht von unten auf den Greifer aus Fig. 19,
- **Fig 21**: eine Rückansicht des Greifers aus Fig. 19,
- **Fig 22**: eine Vorderansicht des Greifers aus Fig. 19,
- **Fig 23**: eine Seitenansicht des Greifers aus Fig. 19,
- **Fig 24**: eine Draufsicht und Untenansicht eines Greifarms des Greifers aus Fig. 19,
- **Fig 25**: eine perspektivische Ansicht auf die Teile eines zweiteiligen Greifarms des Greifers aus Fig. 19.

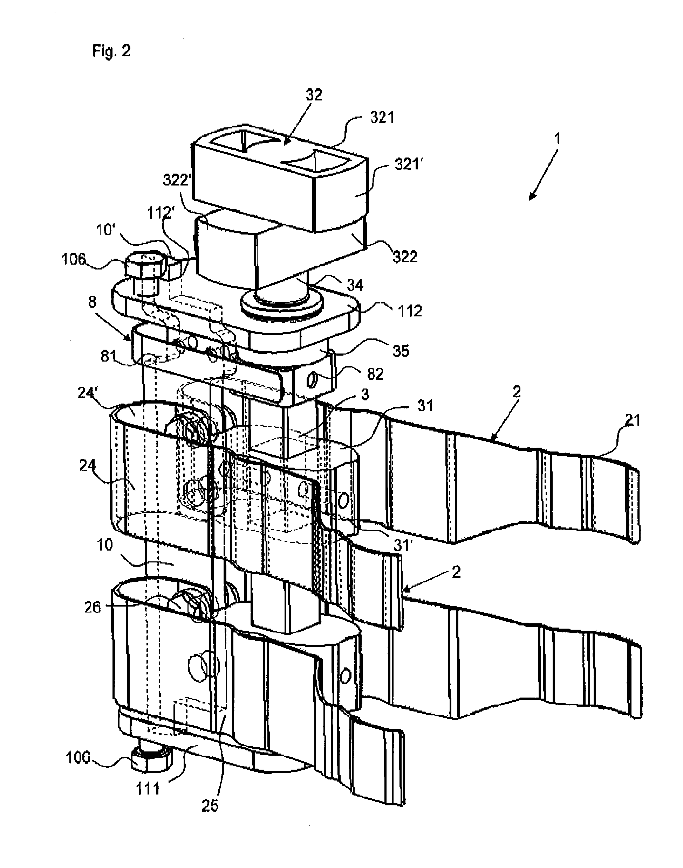

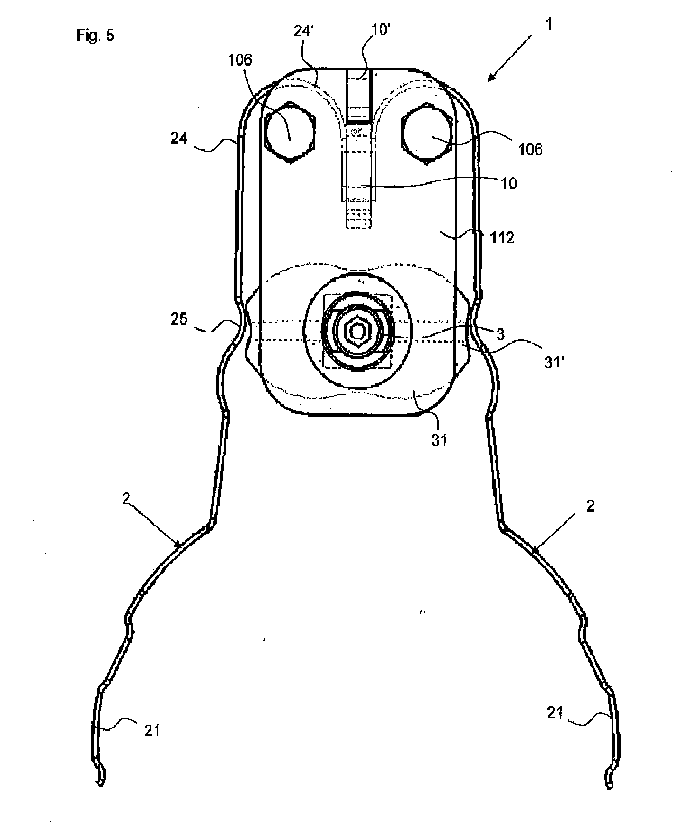

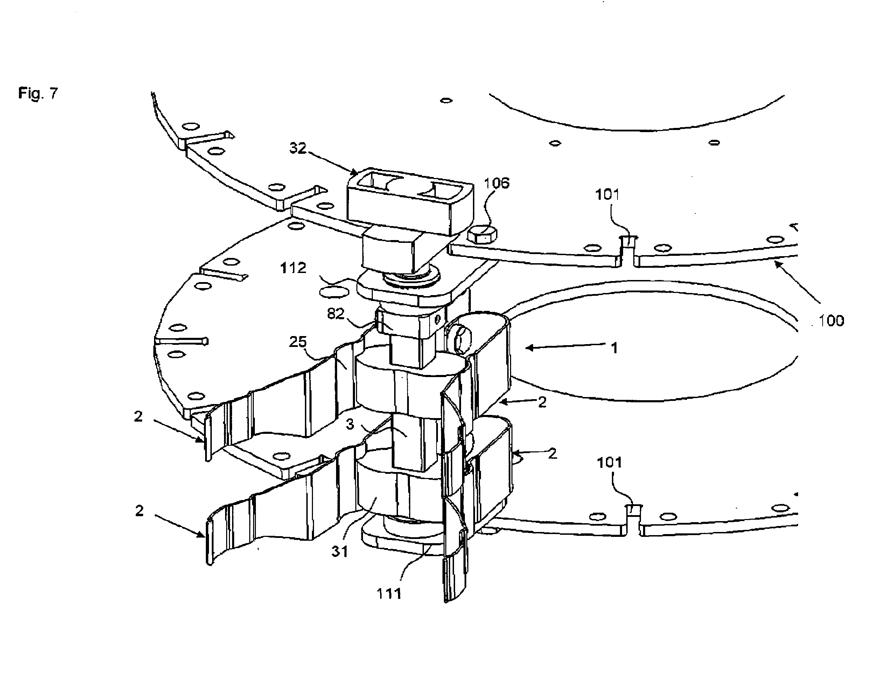

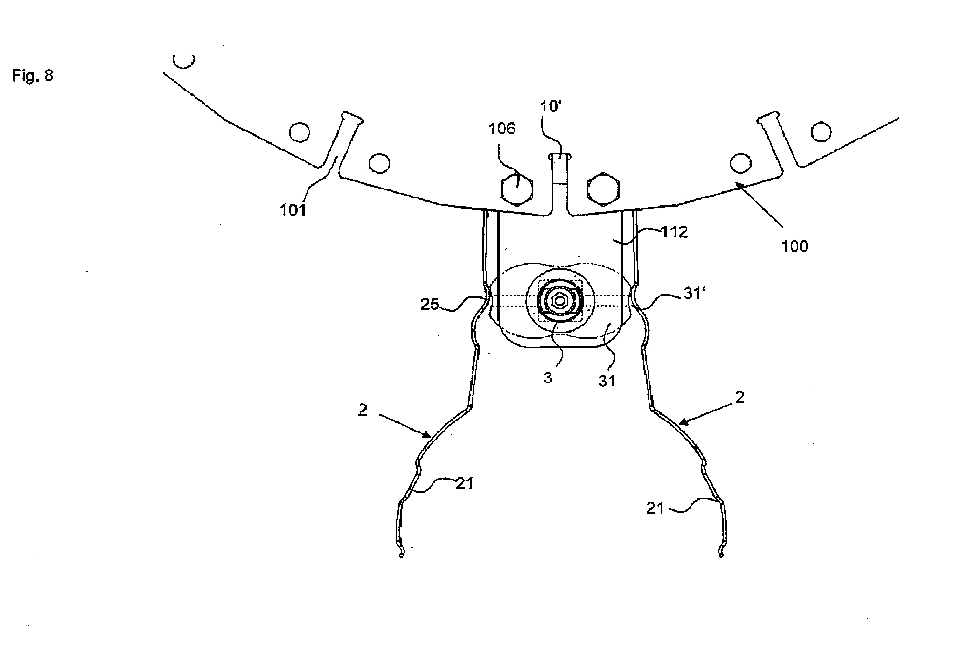

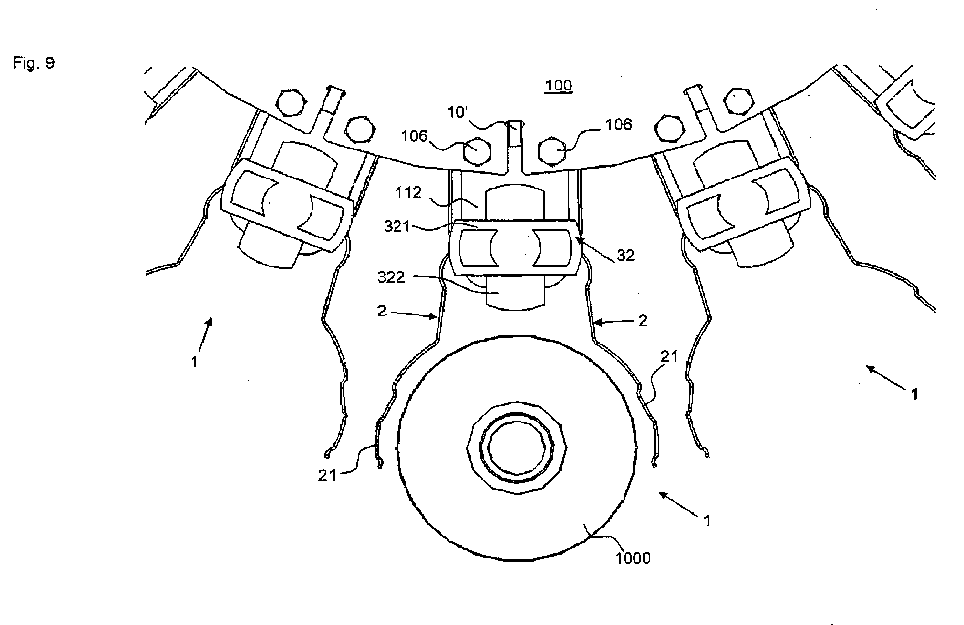

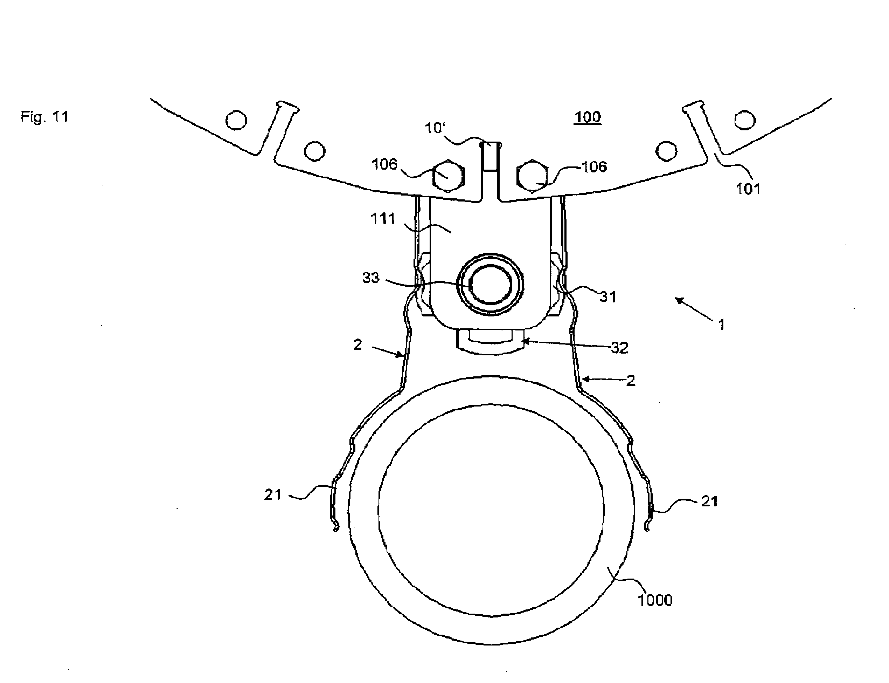

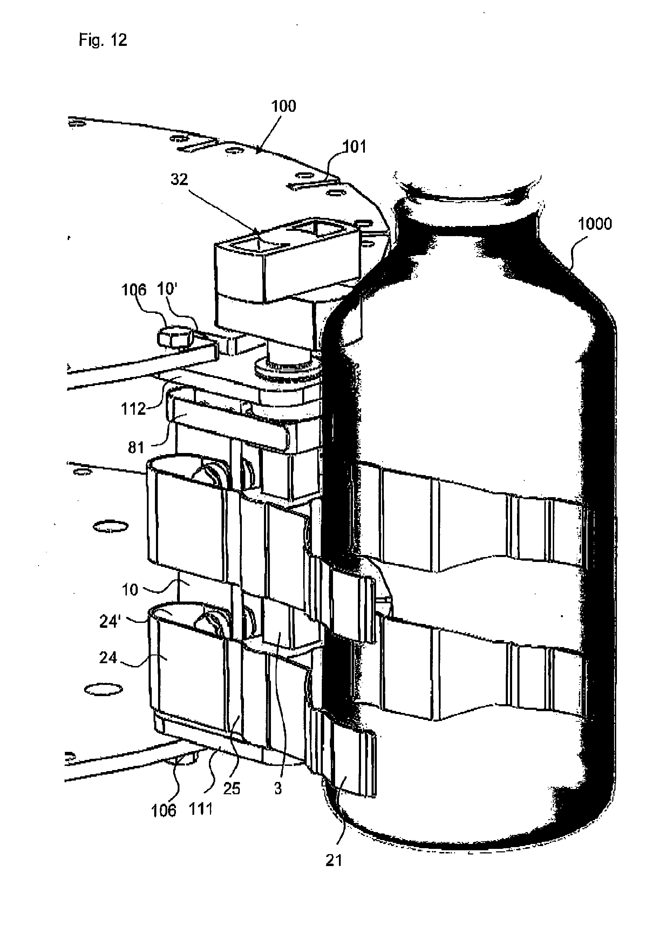

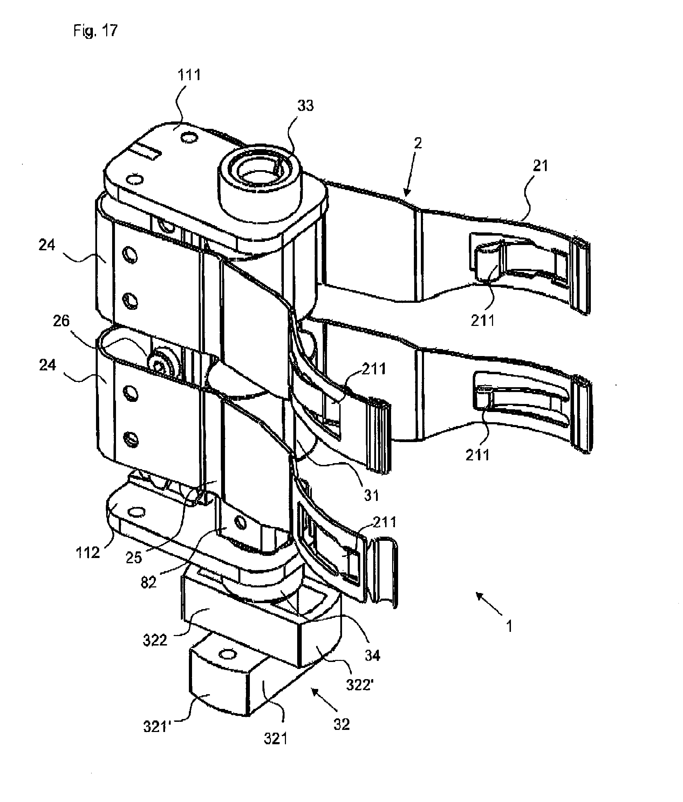

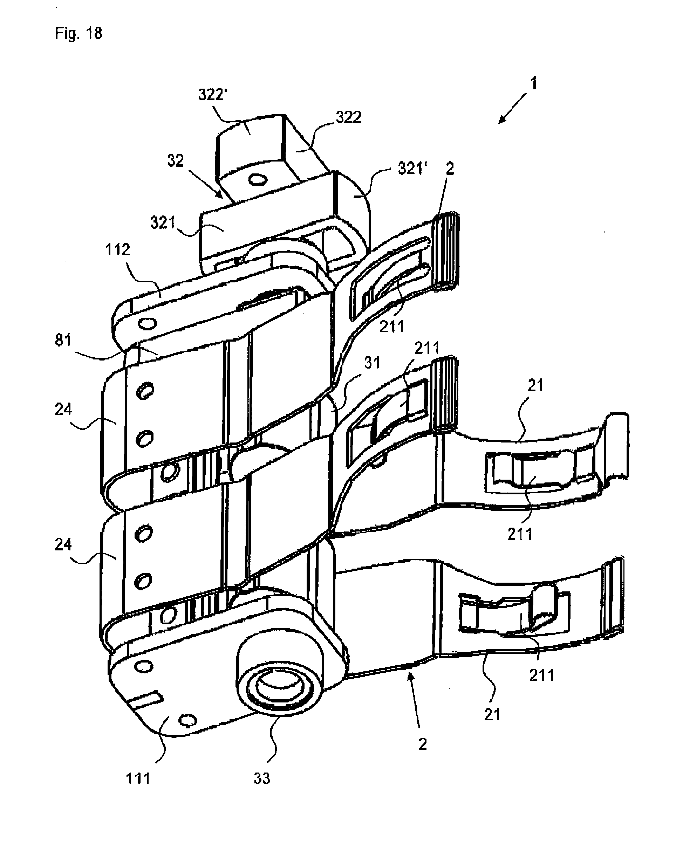

Ein erfindungsgemäßer Greifer 1 gemäß einer ersten Ausführungsform mit integralen Greifarmen 2 ist in Figuren 2 bis 16 gezeigt. Fig. 17 und 18 zeigen ebenfalls einen Greifer mit integralen Greifarmen 2, jedoch mit zusätzlichen Feder- oder Greifelementen 211.

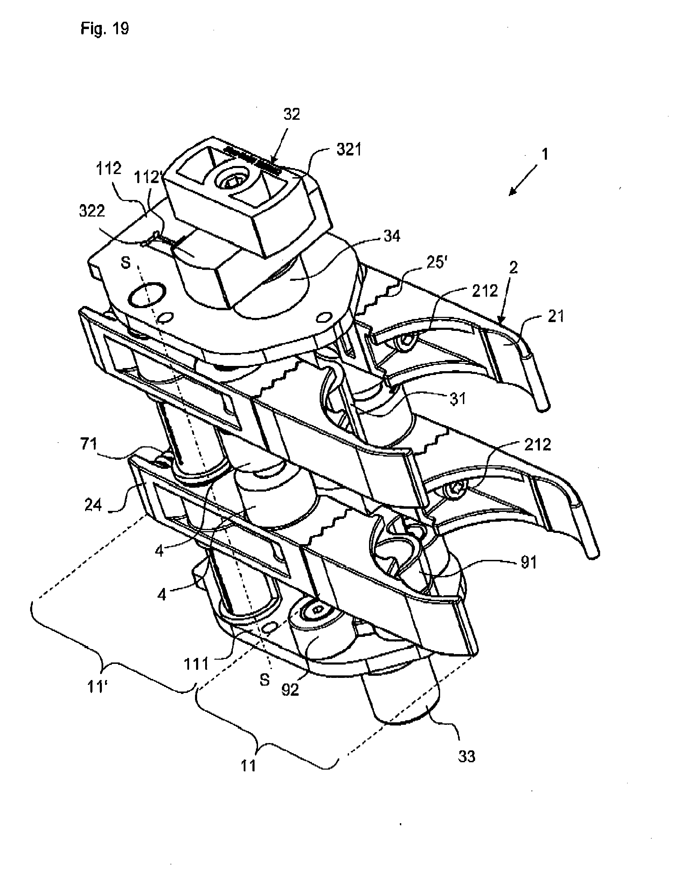

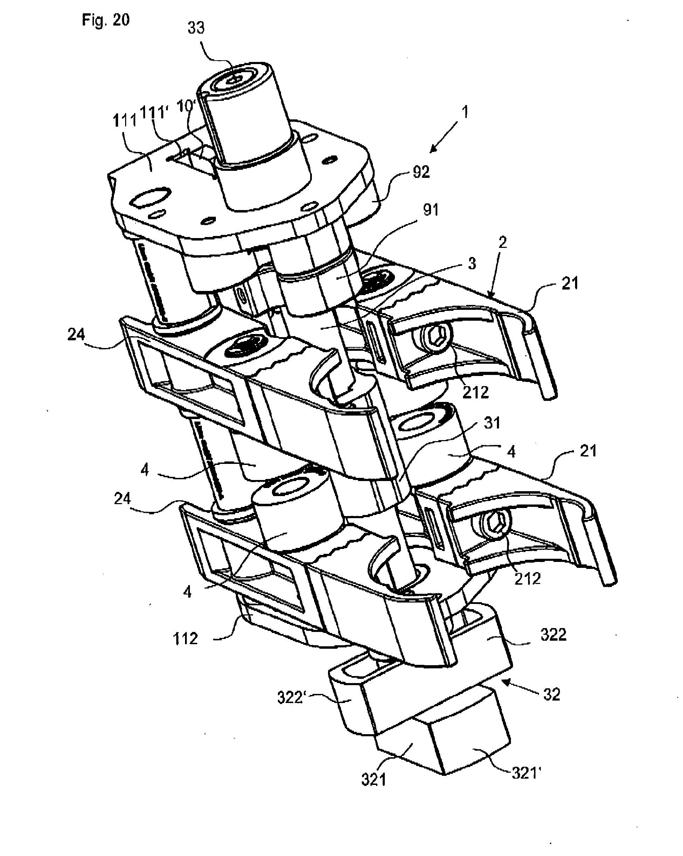

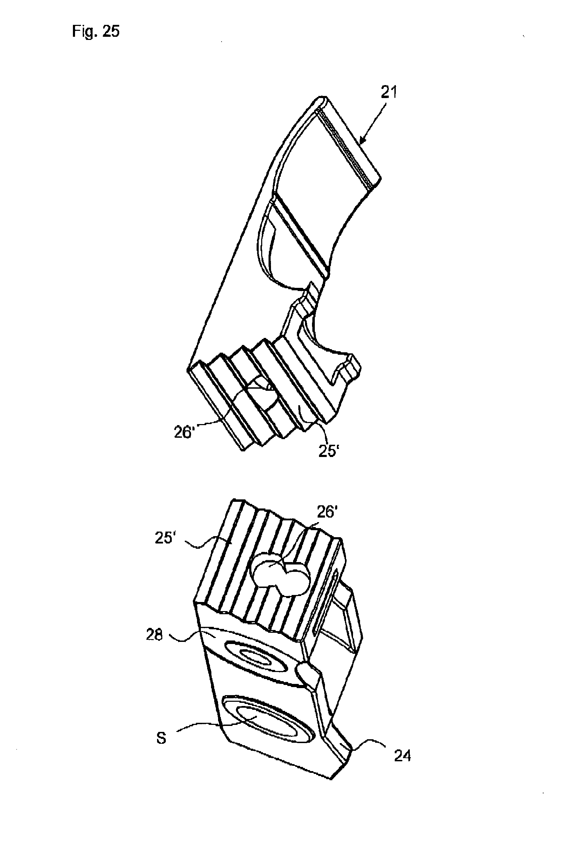

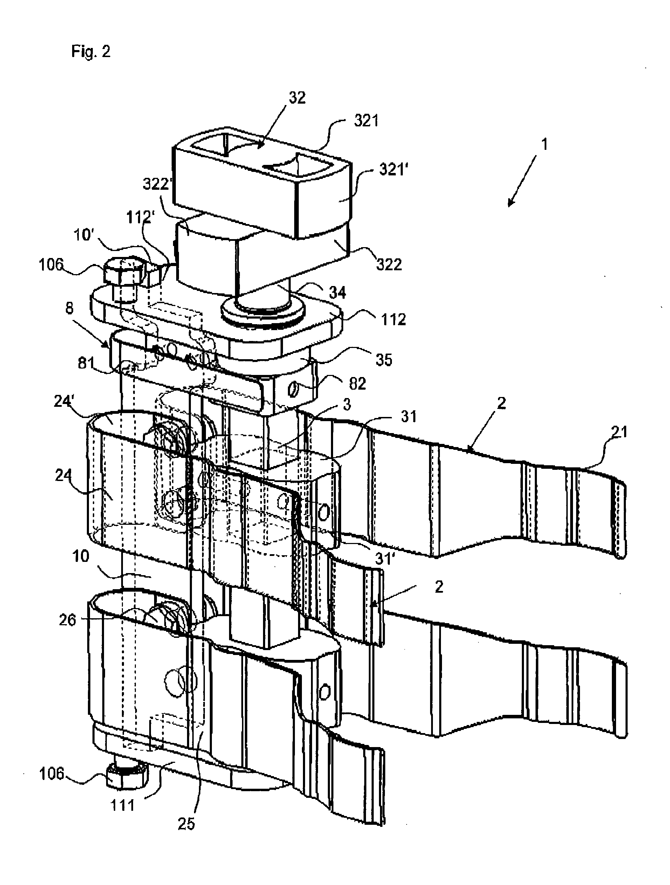

Figuren 19 bis 25 zeigen einen alternativ ausgeführten erfindungsgemäßen Greifer 1, bei dem der Greifabschnitt 11 und der Schwenkabschnitt 11' als getrennte Teile gefertigt und miteinander verbunden werden. So ist in **Fig. 19** **oder** **20** eine Verbindungsschraube 212 zu sehen, die von der Greifabschnittseite entlang der Längserstreckung des Greifarms 2 durch entsprechende Bohrungen 26' (siehe auch **Fig. 25****)** in den Schwenkabschnitt 11' gedreht wird. Diese Verbindung bildet auch eine Sollbruchstelle 25', die es erlaubt, dass der Greifarm im Falle eines Crashs, etwa durch eine verklemmte Flasche 1000, einfach bricht und der Gesamtschaden damit gering gehalten wird.

Allen erfindungsgemäßen Greiferausführungen ist gemein, dass sie - anders als aus dem Stand der Technik bekannt - von hinten, also von der Greiferöffnung abgewandten Seite, frei zugänglich sind.

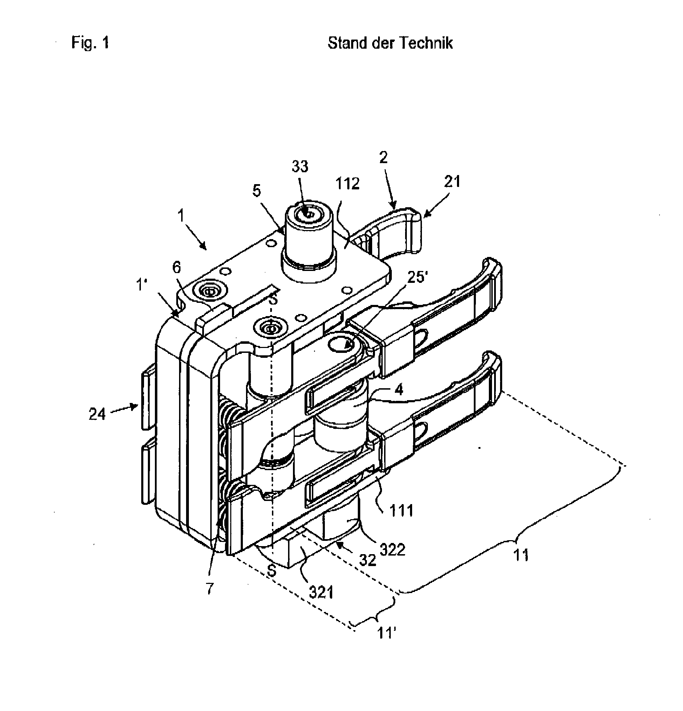

Dies wird durch Vergleich mit einem Greifer 1 aus dem Stand der Technik deutlich, wie er in **Fig. 1** beispielhaft dargestellt ist. Dort ist ein herkömmlicher Greifer 1 in einer perspektivischen Ansicht von unten/hinten gezeigt. Er hat vier Greifarme 2, von denen jeweils zwei gegenüberliegende eine Greifzange oder ein Greifarmpaar bilden. Die Greifarme 2 sind in den gegenüberliegenden Grundplatten 111,112 eines U-förmigen Greiferträgers 1' schwenkbar und an einem Steg 6 mittels Federn 7 gelagert, wobei deren Schwenkachse S in einem den Greifflächen abgewandten Endbereich der Greifarme 2 vorliegt. Durch den U-förmigen Greiferträger 1' wird der Greifer 1 umgriffen und ist somit von hinten nicht mehr zugänglich. Damit wird die Montage/Demontage im Ersatzfall eines Greifarmes 2 erschwert und auch das Sauberhalten des gesamten Greifers, insbesondere in der Getränkeindustrie aufgrund der Hygienevorschriften von erheblicher Wichtigkeit, ist kaum möglich.

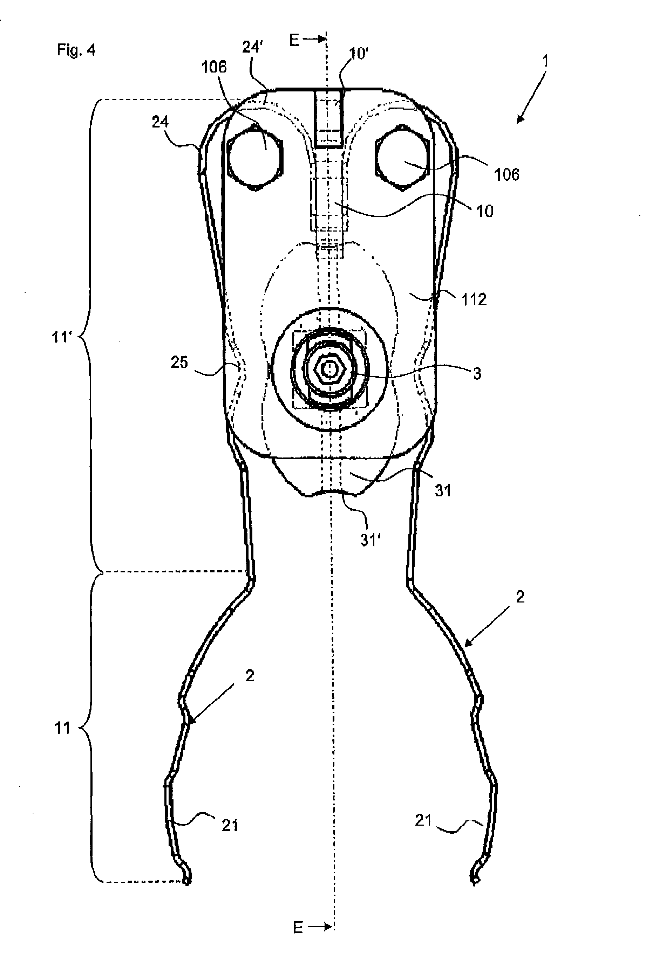

**Fig. 2** zeigt einen erfindungsgemäßen Greifer 1, der frei von hinten zugänglich ist und der hierdurch bereits ermöglicht, dass die Greifarme leicht montiert und demontiert werden können. Er hat zwei Greifzangen mit jeweils zwei Greifarmen 2 und eine drehbar gelagerte Steuerwelle 3 mit zwei Nocken 31, die sich gegen die Greifarme 2 abstützen können. Die beiden planparallel voneinander beabstandeten Grundplatten 111,112 bilden das Lager für die drehbar gelagerte Steuerwelle 3. Die offene Zugänglichkeit der Greifarme 2 ergibt sich dadurch, dass zwischen den Grundplatten 111,112 ein flächiges Stegelement 10 als Greifarmträger angeordnet ist; **Fig. 4** (bezieht sich auf denselben Gegenstand) zeigt, dass die Fläche des flächigen Stegelements 10 in der Symmetrieebene E liegt, die senkrecht zu den Grundplatten 111,112 zwischen den Greifarmen 2 der zumindest einen Greifzange verläuft. Zur Abstützung liegen die Greifarme 2 mit ihrem Schwenkabschnitt 11' an dem flächigen Stegelement 1' an; sie haben weiter einen Greifabschnitt 11 zum Halten der Gefäße, sind mit diesem aber integral ausgebildet. Die Greifarme 2 eines Paares, das eine Zange bildet, sind über gemeinsame Schrauben 26 an dem flächigen Stegelement 10 abgestützt und befestigt. Man sieht weiter, dass der Schwenkabschnitt 11' einen Blattfederabschnitt 24 aufweist, der an seinem von dem Griffende abgewandten Ende eine Umbiegung 24' hat. Die Greifarme 2 sind somit selbst als Federelement ausgebildet, dessen Rückstellkraft die Greifarme 2 in der Geschlossenstellung hält, bis der Nocken 31 bei Drehung der Steuerwelle 3 zum Öffnen der Greifarme 2 an einer S-förmigen Kontur der Greifarme 2 angreift, die im Schwenkabschnitt 11' auf Höhe des Nockens 31 vorliegt. Durch Einwirkung des Nockens 31 werden die Greifarme 2 entgegen der Rückstellkraft aufgespreizt, bis der Nocken um 90° gedreht wurde und die im Nockenberg vorliegenden Nockenmulden 31' an einem konkaven Abschnitt der S-förmigen Kontur 25 anliegen, der somit quasi einen Endanschlag bildet.

Diese Ausführung des Greifers 1 ist hinsichtlich der Teilezahl reduziert und vermeidet jeden überflüssigen Hinterschnitt oder verschmutzungsanfällige Stellen, so dass solche Greifer besonders geeignet sind, in Bereichen erhöhter Hygieneanforderungen eingesetzt zu werden.

Anders als im Stand der Technik sind hier die Schwenkachsen der Greifarme 2 nicht in der oberen und unteren Grundplatte 112,111 gelagert, sondern lediglich die Steuerwelle 3, die aus der oberen Grundplatte 111 mit einem Ende 34 herausragt. An diesem Ende 34 weist die drehbar in den Grundplatten 111,112 gelagerte Steuerwelle 3 ein Steuerelement 32 zur Steuerung des Greifvorgangs auf. Das Steuerelement 32 besteht aus zwei übereinander gestapelten Kontaktkörpern 321,322, die zentrisch und drehfest mit der Steuerwelle 3 verbunden sind. Das Steuerelement 32 ist dazu vorgesehen, in einer Einbausituation in einem Transportstern während des vorbei Bewegens an einer ortsfesten Auslösevorrichtung, etwa einem Umwerfer, einem Auslösenocken, einer Rolle oder Auslösestift, betätigt zu werden und dadurch eine Drehbewegung der Steuerwelle 3 zu bewirken. Hierfür können die Stirnflächen 321',322' der Kontaktkörper 321,322 eine konvexe Krümmung aufweisen.

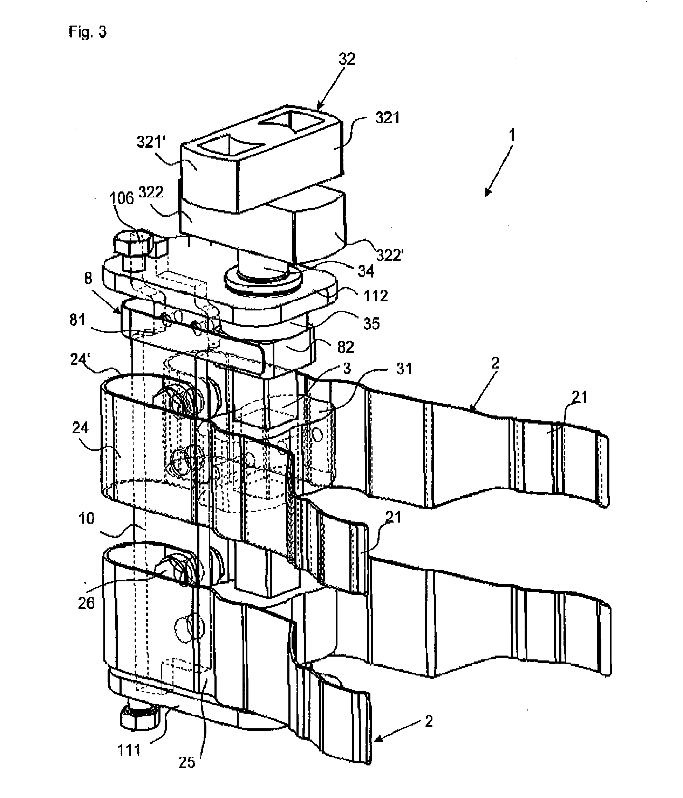

Die Steuerwelle 3 hat in dieser Ausführungsform zwei Nocken 31, die in der Schließstellung die Greifarme 2 nicht berühren (siehe auch **Fig. 4****).** Zum Öffnen der Greifarme 2 bei Drehung der Steuerwelle 3 gleiten die Nockenberge der Nocken 31 an den S-förmigen Abschnitten der Greifarme 2 entlang, bis, wie in **Fig. 3** **und** **4** zu sehen ist, der Nocken 31 um 90° gedreht ist, wobei er mit den in den Nockenbergen vorliegenden Nockenmulden 31' an einem konkaven Teil der S-förmigen Kontur 25 in den Greifarmen 2 anliegt und dadurch die Greifarme 2 in die Offenstellung aufspreizt.

Hierzu ist in dieser Ausführungsform des erfindungsgemäßen Greifers 1 vorgesehen, dass die Greifarme 2 aus einem federelastischen Material gefertigt sind. Die Federlagerung zur Bereitstellung der Rückstellkraft, damit die Greifarme 2 bei weiterer 90°-Drehung der Steuerwelle 3 mit der verbundenen Lösung des Nockens 31 von den Greifarmen 2 wieder in ihre ursprüngliche Geschlossenstellung übergehen, wird hierbei durch eine Umbiegung 24' an dem greiferabgewandten Lagerungsabschnitt 24 der Greifarme realisiert, wobei die Greifarme 2 an der Umbiegung 24' an einem flächigen Stegelement 10 - hier durch Schraubverbindungen 26 - festgelegt sind. Das Stegelement 10, das sich zwischen den Grundplatten 111, 112 in der Symmetrieebene E (vgl. **Fig. 4****,** Symmetrieebene E senkrecht zur Zeichenebene) erstreckt, dient hierbei also gleichzeitig als Greifarmträger und Federsitz und gestattet die freie Zugänglichkeit von hinten an den Greifer 1.

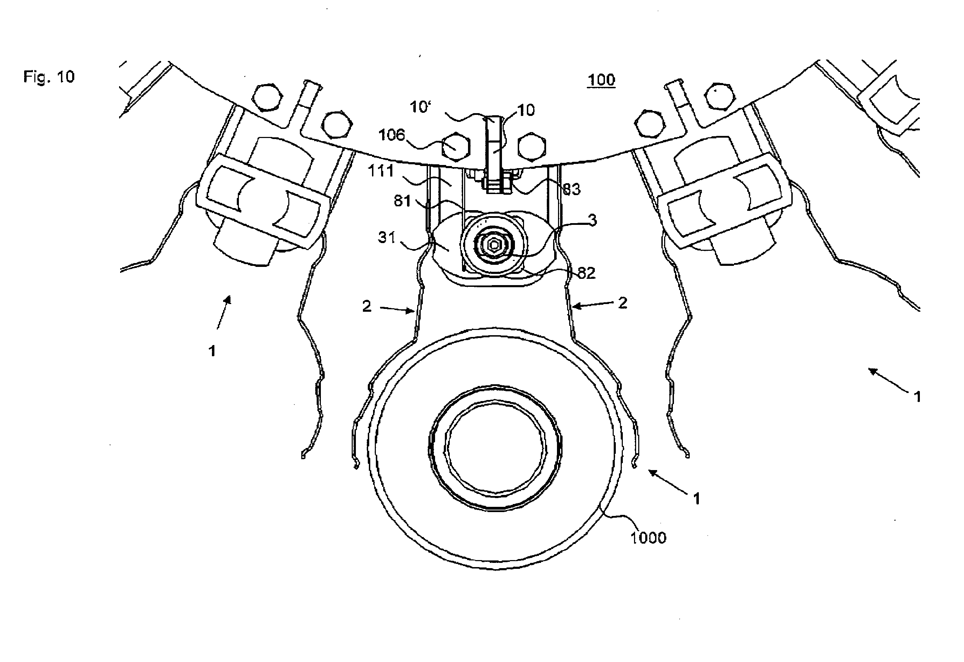

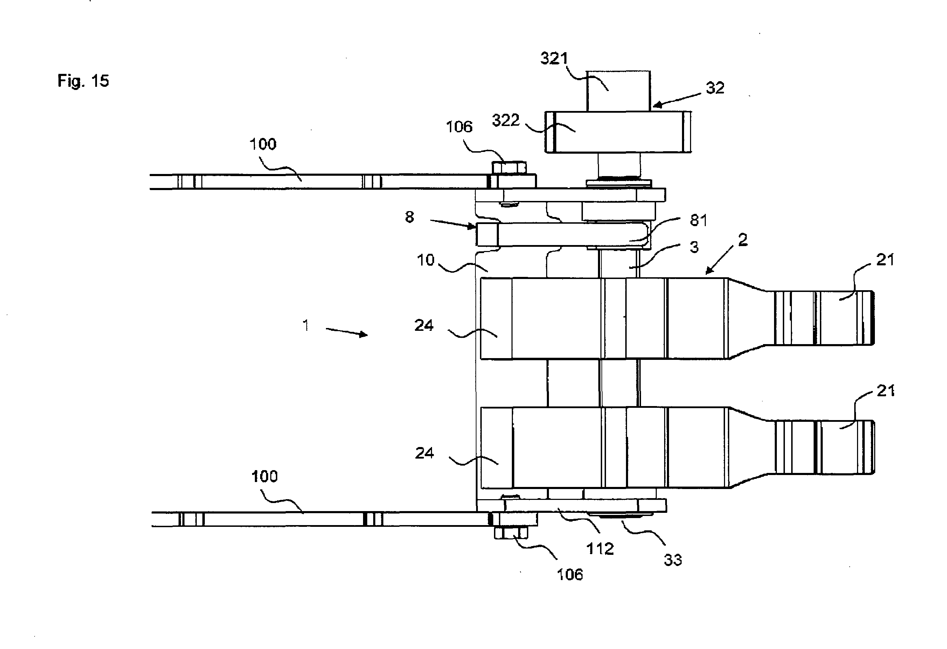

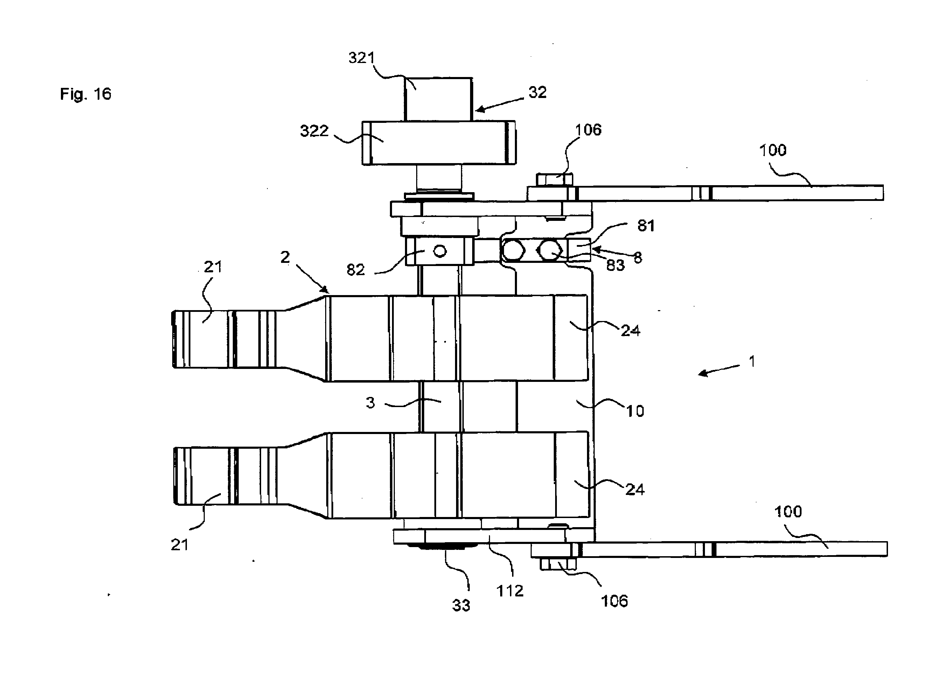

Um eine Verdrehung der Steuerwelle zu vermeiden, weist dieser Greifer 1 zudem eine Synchronisierungsvorrichtung 8 auf, die unterhalb der oberen Grundplatte 112 angeordnet ist. Gegebenenfalls können, anders als dargestellt auch zwei Synchronisierungsvorrichtungen vorgesehen sein, eine zweite könnte oberhalb der unteren Grundplatte 111 liegen. Die Synchronisierungsvorrichtung 8 besteht aus einem drehfest auf der Steuerwelle 3 sitzenden vierkantigen Stabilisierungselement bzw. Hilfsnocken 82 (das mittels Distanzscheibe 35 von der Grundplatte 112 beabstandet ist) und einem J-förmigen Umgriffblech 81, das an seinem geschlossenen Ende das flächige Stegelement 10 umgreift. Wie beispielsweise aus **Fig. 10****,** und insbesondere den Seitenansichten in **Fig. 15** **und** **16** hervorgeht, weist das Umgriffblech 81 einen langen Schenkel, der sich bis zum Hilfsnocken 82 erstreckt und dort anliegt, und einen kurzen Schenkel auf, an dem das Umgriffblech 81 mittels Schrauben 83 an dem Stegelement 10 befestigt ist. Auch das Umgriffblech 81 ist aus einem federelastischen Material gefertigt, so dass der lange Schenkel bei unerwünschter Drehung im Falle, dass beim Greifen großer Gefäße Freilauf der Steuerwelle 3 auftritt und Gefahr besteht, dass die Greifarme ihre Position verändern könnten, an der benachbarten Flachseite des Stabilisierungselements 82 anliegt und gegenhält.

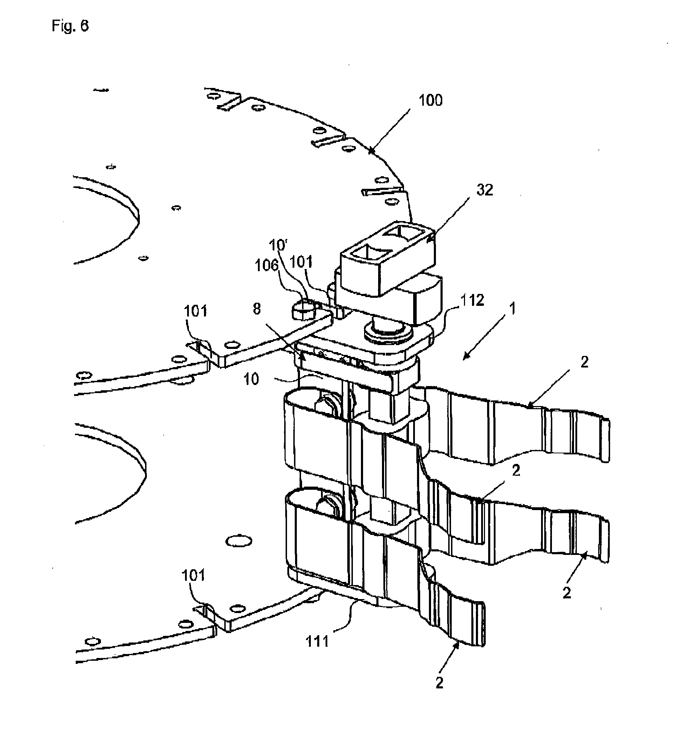

Zur Befestigung des Greifers 1 an einem Transportstern 100, wie in **Figuren 6 bis 16** zu sehen, die den Greifer aus verschiedenen Ansichten in Offen- und Geschlossenstellung mit oder ohne Gefäß 1000 zeigen, können Schraubverbindungen 106 vorgesehen sein, die an den Grundplatten 111,112 befestigt werden können. Ein über die Grundplatten 111,112 hinausragender Überstand 10' des flächigen Stegelements 10 kann die Positionierung am Transportstern 100 unterstützen, da dort Schlitze 101 zur Aufnahme dieser Überstände 10' vorgesehen sind.

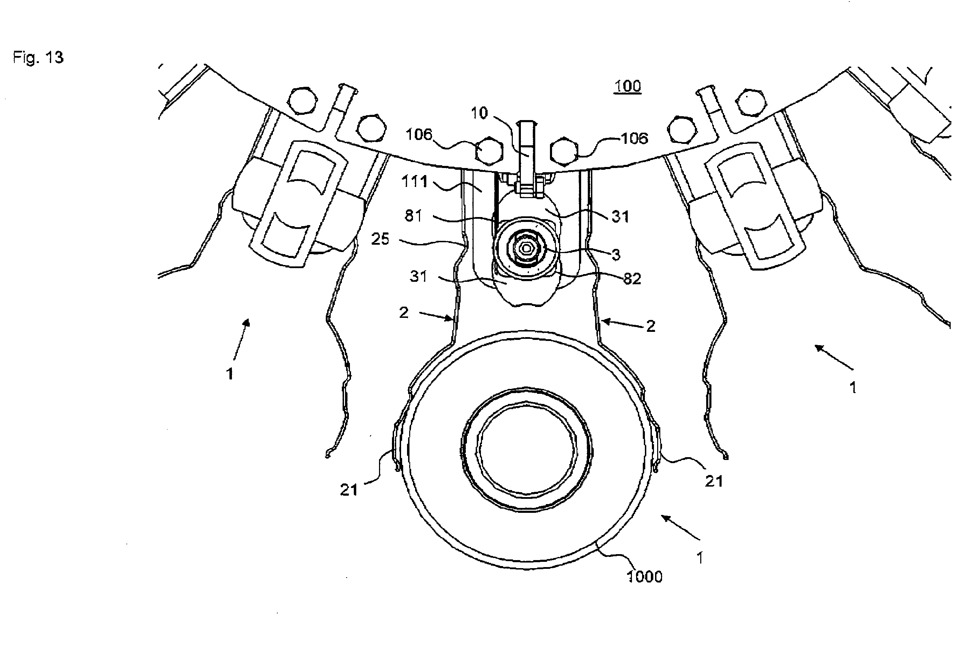

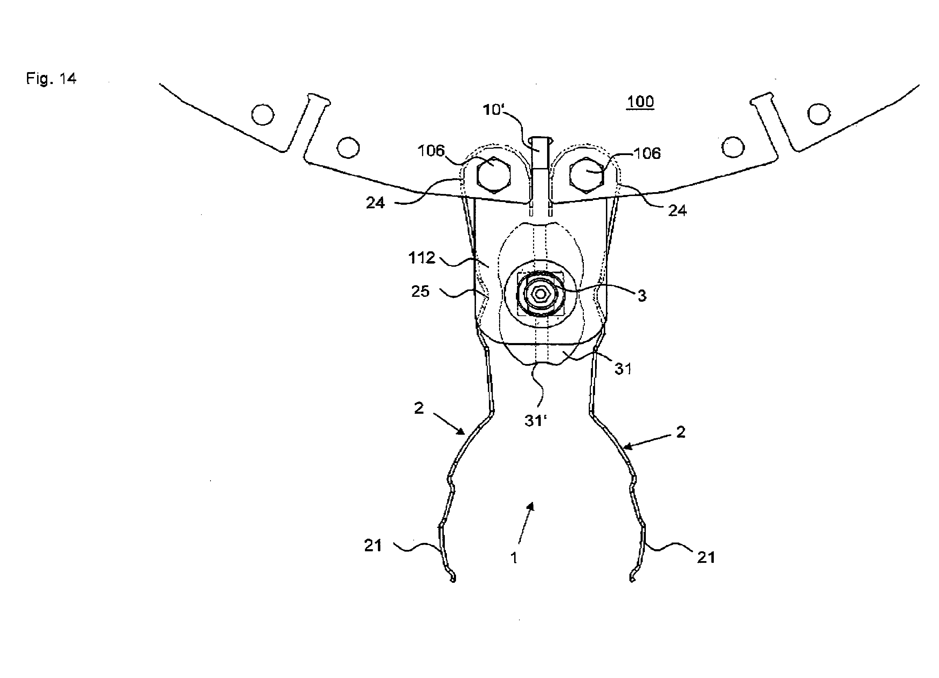

Zur Aufnahme eines Gefäßes 1000 werden die Greifarme 2 von dem Nocken 31 aufgespreizt, wie z. B. in **Fig. 10** zu sehen ist. Gehalten wird das Gefäß 1000 erst, wenn der Nocken 31 wieder um 90° gedreht wird, so dass die Greifarme 2 korrespondierend zum Ablauf der Nockenkontur an dem S-förmigen Abschnitt der Greifarme 2 eine Schließbewegung ausführen, wobei die Greifabschnitte 21 das Gefäß 1000 haltend umgreifen, wie in **Fig.13** zu sehen ist. Die Federfunktion der Greifarme 2 sorgt dabei für die erforderliche Haltekraft - erst ohne Gefäß 1000 kehren die Greifarme 2 aufgrund der Federrückstellkratt in ihre geschlossene Ruhestellung zurück (vgl. **Fig. 14****).**

Der Greifer 1 aus **Figur 17** **und** **18** unterscheidet sich in erster Linie in der Gestaltung der Greifarme 2 von dem im Zusammenhang mit **Fig. 1 bis 16** beschriebenen Greifer 1. Die Greifarme 2 haben an ihrem Greifabschnitt **21** zusätzliche Greifelemente 211. Ferner ist hier anstelle eines S-förmigen Abschnitts lediglich ein konkaver Abschnitt als Endanschlag für die Nocken 31 vorgesehen. Zudem erstreckt sich hier die Steuerwelle 3 auch an dem Ende 33, das von dem Ende 34 mit dem Steuerelement 32 abgewandt ist, aus der Grundplatte 111 heraus. Dieses Ende 33 kann mit einer hier nicht gezeigten Abdeckkappe verschlossen sein.

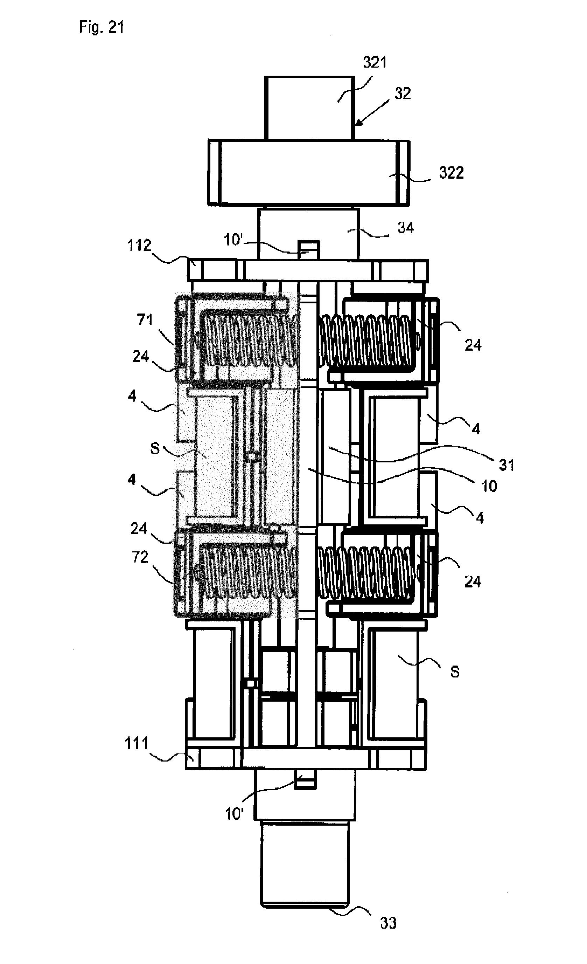

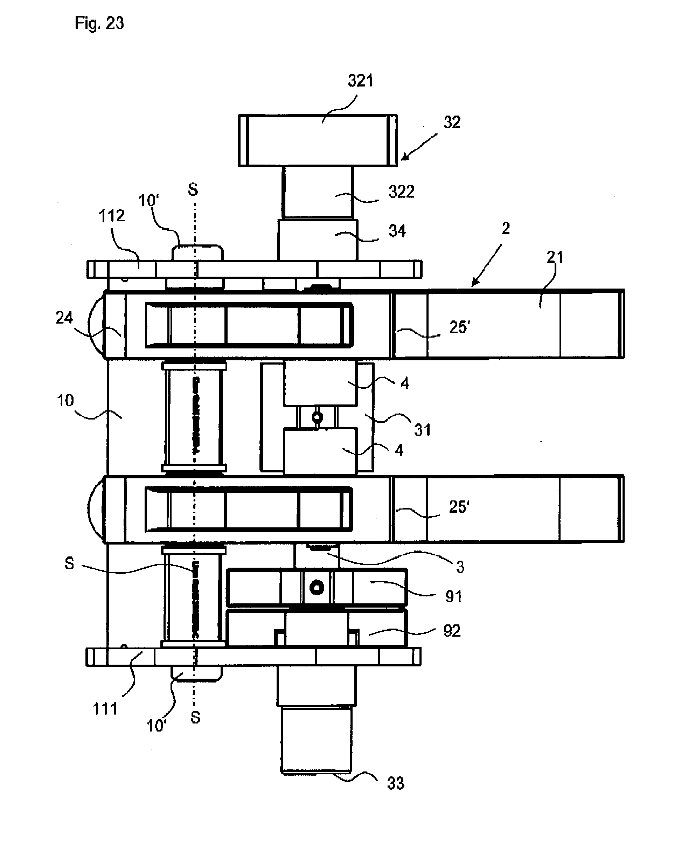

Auch der Greifer 1 aus **Figuren 19 bis 23** unterscheidet sich durch die Gestaltung der Greifarme 2 von dem im Zusammenhang mit **Fig. 2 bis 16** beschriebenen Greifer 1: Die Greifarme 2 sind hier zweiteilig mit einem Lagerabschnitt 11' und einem Greifabschnitt 11 ausgebildet und der Greifer 1 hat, wie **Fig. 21** zeigt, eine Federanordnung aus zwei Federelementen 71,72 pro Greifzange, die zur Ausübung der Schließkraft zwischen den beiden Lagerabschnitten 11' paariger Greifarme 2 angeordnet sind. Das flächige Stegelement 10 bildet dabei für die entsprechend paarigen Federelemente 71,72 einen Federsitz. Wie **Fig. 19** **und** **23** verdeutlichen, liegt die Schwenkachse S des Greifarms 2 am Ende des Lagerabschnitts 11'. Die paarigen Federelemente 71,72 sind hier Schraubenfedern.

In **Fig. 19****,** **20****,** **22** **und** **23** ist im Übrigen auch das Magnetelementepaar 91,92 zu sehen, das der Synchronisierung der Bewegungen der Greifer 2 im Transportstern dient. Das Magnetelement 92 ist an einer nach innen weisenden Seite der Grundplatte 111 angeordnet und ist wie der korrespondierende Kontaktkörper 322 des Steuerkreuzes 32 ausgerichtet. Gegebenenfalls kann das Magnetelement 92 die gleiche Geometrieform wie der korrespondierende Kontaktkörper 322 des Steuerkreuzes 32 haben. Das Magnetelement 92 hat ferner eine Durchführung für die Steuerwelle 3 und steht mit dem anderen Magnetelement 91 in Magnetkontakt. Das andere Magnetelement 91, das hinsichtlich seiner Ausrichtung und gegebenenfalls auch seiner Form mit dem Kontaktkörper 321 korrespondiert, sitzt drehfest auf der Steuerwelle 3. Hat diese nun durch das weite Aufspreizen der Greifarme 2 und Kontaktverlust der Nocken 31 mit denselben aus o. g. Grund zuviel Spiel, hält der entsprechend positionierte Magnet 92 an der Grundplatte 111 den zweiten Magneten 91 und damit die Steuerwelle 3 in der ausgelenkten Position, und wirkt unerwünschter Krafteinwirkung auf die Steuerwelle 3 entgegen

Solche Greifarme 2 wie bei den Greifern 1 aus **Figuren 19 bis 23** gezeigt, lassen sich sehr leicht und billig herstellen, sie können daher im Crashfall ohne weiteres geopfert werden, da sie Dank der Zugänglichkeit der erfindungsgemäßen Greifer von der rückwärtigen und damit von der Montageseite aus leicht ausgewechselt werden können.

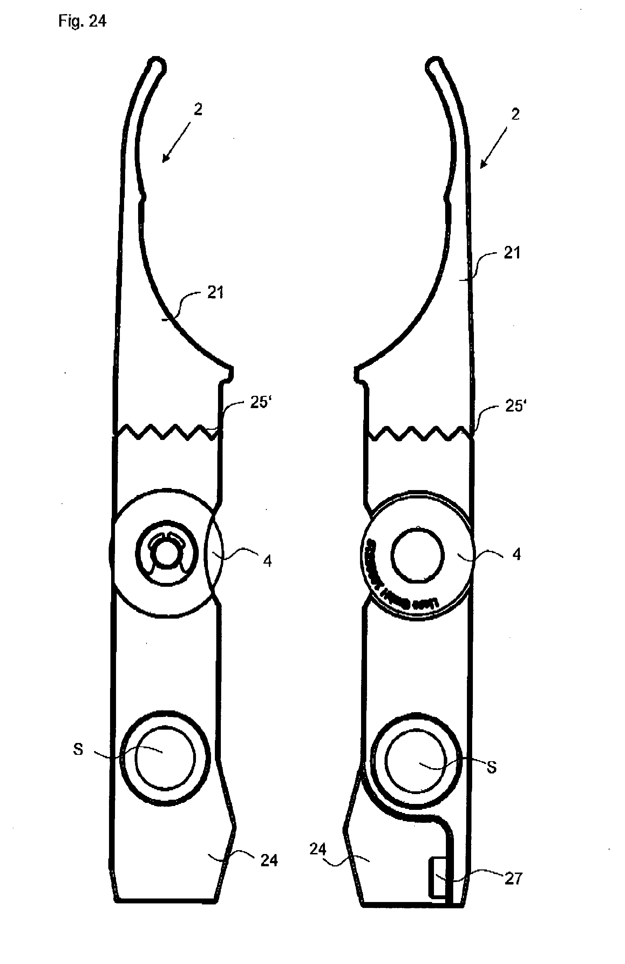

Zum gezielten Crashen kann kann ein Greifarm 2 im Bereich zwischen dem Greiferabschnitt 11 und dem Lagerabschnitt 11' ein Gelenk oder eine Sollbruchstelle 25' haben: Die Ausführungsform des Greifers 1 in **Fig. 19 bis 23** und auch die Einzeldarstellungen der Greifarme 2 **in** **Fig. 24** sowie die beiden Abschnitte Greifabschnitt 11 und Schwenkabschnitt 11' in **Fig. 25** zeigen am Übergang der beiden Abschnitte zueinander eine geriffelte Verbindungsflüche, an der beide Teile mittels Schraube 212 einerseits verbunden werden können, aber andererseits auch brechen können, wenn Überlast auftritt. Für die Verbindungsschraube 212 sind in den geriffelten Verbindungsflächen Durchtrittsöffnungen 26' vorgesehen, wie in **Fig. 25** zu sehen ist. Im Regelbetrieb, d. h. ohne Überschreiten der Auslösekraft, "verhalten" sich die Greifarme starr.

**Fig. 19 bis 23** zeigen die Steuerwelle 3 mit einem einzigen Nocken 31, auf dem jeweils Nockenfolger 4 der beiden Greifarme 2 der zwei übereinander angeordneten Greifzangen anliegen und der zur Steuerung der Schließbewegung der Greifzangen 2 dient. Der Nocken 31 ist so gestaltet, dass er zwei stabile Zustände mit den anliegenden Nockenfolgern 4 einnehmen kann; sowohl auf dem Nockenberg als auch in dem Nockental liegt der Nockenfolger 4 so an, dass ein unbeabsichtigtes Verdrehen der Steuerwelle 3 erschwert ist.

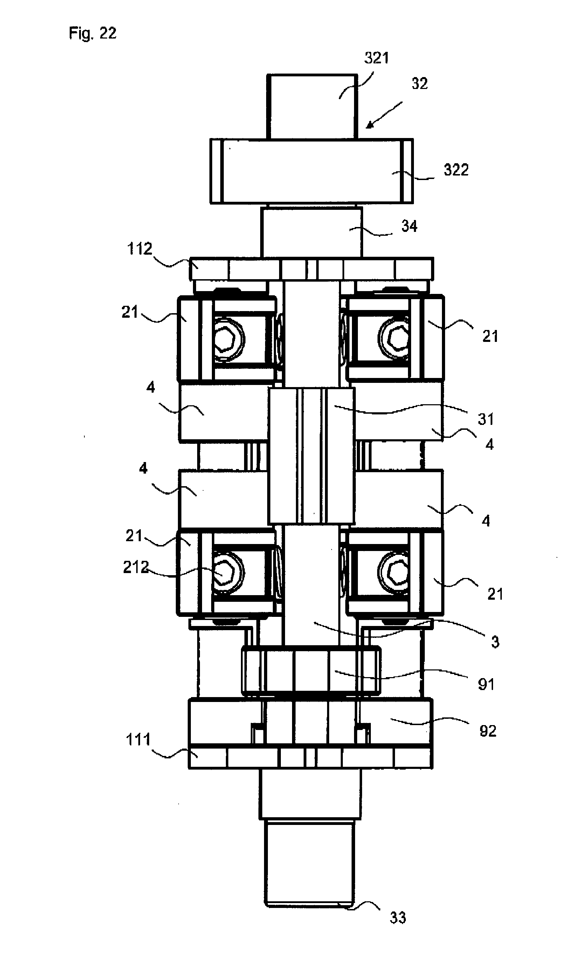

Jeder der Greifarme 2 hat einen ihm zugeordneten Nockenfolger 4, bei dem es sich um eine in einem Nockensitz 28 wälzgelagerte Führungsrolle handelt (siehe auch **Fig. 24** **und** **25****),** deren Drehachse drehfest mit dem Greifarmkörper verbunden ist, wobei die eigentliche Rolle um die Drehachse gelagert ist. Die Schließ- und Öffnungszeitpunkt(e) werden durch die Nockenform bestimmt; die Nocke 31 überträgt jedoch die Schließ- bzw. Haltekraft nicht; dies geschieht über paarweise angeordnete Federelemente 71,72 (**Fig. 21****,****22****)** die auf die Greifarme 2 einwirkt. Die Federelemente 71,72 werden mittels eines stiftartigen Federsitzes 27 (siehe **Fig. 24****)** in dem Federabschnitt 24 jedes Greifarms 2 gehalten.

Die einzelnen Greifarme 2 sind untereinander nicht gekoppelt, wodurch eine individuelle Beweglichkeit im Falle von Fehlfunktionen, wie dem Verklemmen von Fremdkörpern oder der Fehlzuführung von Gefäßen, ermöglicht wird; bevor es zu einer schädigenden Überlastung kommt, weicht der Greifarm 2, an dem die durch das Federpaar vorgegebene Grenzkraft zuerst überschritten wird, aus.

Bei den Greifern 1 beider Varianten, siehe Fig. **2** **oder** **19****,** ragt die Steuerwelle 3 an ihrem dem Steuerelement-Ende 34 abgewandten Ende 33 ein Stück Ober die untere Grundplatte 112 hinaus. Die Geometrie des abgewandten Endes 33 entspricht hierbei einer Geometrie des Steuerelement-Endes 34, wodurch ermöglicht wird, das Steuerelement 32 von dem Steuerelement-Ende 34 zu entkoppeln und auf das abgewandte Ende 33 der Steuerwelle 3 drehfest zu koppeln, wodurch das Steuerelement-Ende 34 zum abgewandten Ende 33 wird und umgekehrt. Dies ermöglicht es, den erfindungsgemäßen Greifer 1 für Transportstern-Typen einzusetzen, die die Auslösevorrichtung(en) oben oder unten haben. Die Kopplung des Steuerelements 32 mit der Steuerwelle 3 ist daher lösbar gestaltet; etwa durch eine Passfederverbindung o. ä.

**Fig. 4** zeigt eine Draufsicht auf den Greifer der einteiligen Greifarmvariante ohne Steuerelement und verdeutlicht, dass das Stegelement 10, von dem hier nur der Überstand 10' richtig zu sehen ist, durch einen Schlitz 112' der Grundplatte 112 ragt Das zweite Ende des Stegelements 10 ist in dem entsprechenden Schlitz der unteren Grundplatte aufgenommen, so dass das Stegelement 10 durch die beiden Grundplatten 111,112 gehalten wird. In Verbindung mit **Fig. 2** zeigt sich eine Schulter des Stegelements 10, auf dem gerade die Grundplatte 112 aufliegt. Der Überstand 10' dient nicht nur der Verbindung mit der Grundplatte, sondern positioniert den Greifer 1 auch bei der Anordnung in einem Transportstern 100, **siehe** **Fig. 6****,** der hierzu ebenfalls einen entsprechenden Schlitz 101 hat. Durch die Fügung mit dem Schlitz 101 des Transportsterns 100 und durch eine entsprechende Verschraubung wird der Greifer 1 am Transportstern 100 montiert. Das Stegelement 10 dient für alle Greifarmvarianten als Federsitz und Greifarmträger zugleich. **(****Fig. 20** bspw. zeigt den entsprechenden Schlitz 111' in der Grundplatte 111.)

Bei den in **Fig. 2 bis 18** gezeigten Ausführungsformen ist eben die Feder eine Umbiegung 24' des Greifarms selbst, die durch Anlage an dem Stegelement 10 quasi ihren Sitz findet; bei den in **Fig. 20 bis 24** gezeigten Ausführungsvarianten sind Federn 71,72 vorhanden, die am Stegelement anliegen und dort in einem Teller aufgenommen sind.

**Fig. 21** verdeutlicht den Federsitz van der rückwärtigen Seite, **Fig.** 22 zeigt dieselbe Ausführungsform der zweiteiligen Greifarmvariante von vorne und **Fig. 23** zeigt die Schwenkachse S für diesen Fall. Die Federn 71,72 sind dabei an dem Ende des Schwenkabschnitts 11' angeordnet, das vom Greifabschnitt abgewandt liegt. Da die sich gegenüberliegenden Greifarme 1 einer Greifzange 2 untereinander kinematisch nicht gekoppelt sind, ist es möglich, auch einen einzelnen Greifarm 1 gegen die Federkraft auszuschwenken, was insbesondere im Falle einer Fehlfunktion des Transportsternes 100, in dem der Greifer 1 eingesetzt wird, ein vorteilhaftes Sicherheitsmerkmal darstellt. Die Synchronisation der Greifarmbewegung erfolgt rein kraftgesteuert, wobei beide Federn 71,72 die gleiche Federkennlinie haben müssen.

Die Greifflächen der Greifarme 1 haben in dieser Ausführungsform, siehe **Fig. 24** **und** **25****,** eine Kreisbogenform, die mit dem Querschnitt des zu greifenden Gefäßes korrespondiert

### BEZUGSZEICHENLISTE

- 1: Greifer
- 10: Greiferträger flächiges Stegelement
- 10': Überstand
- 11,11': Greifabschnitt, Lagerungsabschnitt
- 111,112: Grundplatten
- 111',112': Schlitz in Grundplatte
- 1': Greiferträger SdT U-Blech
- 2: Greifarm
- 21: Greifarmteil mit Greifabschnitt
- 211: Feder- oder Greifelement
- 212: Verbindungsschraube
- 24: Greifarmteil mit Federabschnitt oder Lagerungsabschnitt
- 24': Umbiegung
- 25: S-förmige Kontur
- 25': Überlastgelenk/Sollbruchstelle
- 26, 26': Schraubverbindung, Durchtrittsöffnung
- 27: Federsitz
- 28: Nockenfolgersitz
- 3: Nockenwelle
- 31: Nocken, Element mit Nockenfunktion
- 31': Nockenmulde
- 32: Steuerelement
- 321,322: Kontaktkörper
- 321',322': Stirnflächen
- 33: abgewandtes Ende
- 34: Steuerelement-Ende
- 35: Distanzscheibe
- 4: Nockenfolger, drehbar gelagerte Rolle
- 6: Steg
- 71,72: Federn
- 8: Synchronisierungsvorrichtung
- 81: Umgriffelement J-Blech
- 82: Hilfsnocken
- 83: Schraubverbindung
- 100: Transportstern
- 101: Schlitz in Transportstern
- 106: Schraubverbindung
- 1000: Gefäß
- E: Symmetrieebene
- S: Schwenkachse

## Patentansprüche

1. Greifer (1) für eine Gefäßhandhabungsvorrichtung, umfassend
- einen Greifarmträger und
- zumindest eine Greifzange mit zwei Greifarmen (2) und
- eine drehbar gelagerte Steuerwelle (3) mit zumindest einem Element mit Nockenfunktion (31), das sich gegen die Greifarme (2) abstützt,
**dadurch gekennzeichnet, dass**
zwei planparallel voneinander beabstandete Grundplatten (111,112) das Lager für die drehbar gelagerte Steuerwelle (3) bilden und sich zwischen den zwei Grundplatten (111,112) ein flächiges Stegelement (10) als Greifarmträger erstreckt, wobei eine Fläche des flächigen Stegelements (10) in oder parallel zu einer Symmetrieebene (E) liegt, die senkrecht zu den Grundplatten (111,112) zwischen den Greifarmen (2) der zumindest einen Greifzange verläuft,
und wobei an der Rückseite des Greifers (1) die Greifarme (2) frei zugänglich sind.

2. Greifer (1) nach Anspruch 1,
**dadurch gekennzeichnet, dass**
jeder Greifarm (2) einen Schwenkabschnitt (11') und einen Greifabschnitt (11) aufweist, die integral ausgebildet sind, wobei die Greifarme (2) spreizbar über den Schwenkabschnitt (11') an dem flächigen Stegelement (10) abgestützt und befestigt sind.

3. Greifer (1) nach Anspruch 1 oder 2
**dadurch gekennzeichnet, dass**
der Schwenkabschnitt (11') einen Federabschnitt (24), insbesondere einen Blattfederabschnitt (24) aufweist, der an seinem freien Ende in der Blattebene eine Umbiegung (24') aufweist, die zur Abstützung an dem flächigen Stegelement (10) anliegt.

4. Greifer (1) nach zumindest einem der Ansprüche 2 oder 3, **dadurch gakennzeichnet, dass**
der Schwenkabschnitt (11') an seinem zu dem Greifabschnitt (11) weisenden Ende eine S-förmige Kontur (25) aufweist, die eine Steuerkurve mit einem Endanschlag für die Vorrichtung mit Nockenfunktion (31) bildet, das zwischen den beiden S-förmigen Konturen der Schwenkabschnitte (11') der beiden paarigen Greifarme (2) einer Greifzange vorliegt.

5. Greifer (1) nach zumindest einem der Ansprüche 1 bis 4, **dadurch gekennzeichnet, dass**
die Vorrichtung mit Nockenfunktion (31)
- ein Nocken (31) ist, oder
- ein nockenförmiges Element, das einen auf der Steuerwelle (3) sitzenden, als Lager fungierenden Nocken aufweist, an dem für jeden Greifarm (2) eine Rolle oder Walze oder Kugel zu dem zugehörigen Greifarm (2) weisend gelagert ist, und/oder
dass die Vorrichtung mit Nockenfunktion (31)
- ein Nocken (31) ist und dass an jedem der paarigen Greifarme (2) eine drehbar gelagerte Rolle oder Walze oder Kugel zur Zusammenwirkung mit dem Nocken (31) angeordnet ist.

6. Greifer (1) nach zumindest einem der Ansprüche 3 bis 5,
**dadurch gekennzeichnet, dass**
die Greifzange mit zwei Greifarmen (2) einstückig ausgebildet ist, wobei bevorzugt ein u-förmiger Verbindungsabschnitt die Federabschnitte (24) der beiden Greifarme (2) verbindet.

7. Greifer (1) nach Anspruch 1 oder 5,
**dadurch gekennzeichnet, dass**
die Greifarme (2) zumindest zweiteilig mit einem Schwenkabschnitt (11') und einem Greifabschnitt (11) ausgebildet sind, und dass der Greifer (1) eine Federanordnung aus zumindest zwei Federelementen (71,72) aufweist, die zur Ausübung einer Schließkraft zwischen den beiden Schwenkabschnitten (11') paariger Greifarme (2), die eine Greifzange bilden, angeordnet sind,
wobei das flächige Stegelement (10) für die entsprechend paarigen Federelemente (71,72) einen Federsitz bildet.

8. Greifer (1) nach zumindest einem der vorstehenden Ansprüche,
**dadurch gekennzeichnet, dass**
eine Schwenkachse (S) des Greifarms (2) bevorzugt nahe einem Ende des Schwenkabschnitts (11') liegt, und/oder dass die paarigen Federelemente (71,72) Druckfederelemente sind und bevorzugt zumindest eine Schraubenfeder (71,72) umfassen, besonders bevorzugt eine Reihen- oder Parallelschaltung von Schraubenfedern.

9. Greifer (1) nach zumindest einem der vorstehenden Ansprüche,
**dadurch gekennzeichnet, dass**
die Steuerwelle (3) ein Steuerelement-Ende (34) hat, das aus einer der Grundplatten (111,112) hervorragt, und wobei der Greifer (1) ein Steuerelement (32) aufweist, das drehfest mit dem Steuerende der Steuerwelle (3) verbunden ist und das zur Drehmomenteinleitung in die Steuerwelle (3) mittels einer Auslösevorrichtung einer vorgegebenen Gefäßhandhabungsvorrichtung ausgebildet ist, wobei bevorzugt
das Steuerelement (32) ein Steuerkreuz aus zwei gestapelten länglichen Kontaktkörpern (321,322) ist, die jeweils drehfest mit der Steuerwelle (3) verbunden sind, wobei besonders bevorzugt die Kontaktkörper (321,322) zentrisch auf der Steuerwelle (3) befestigt sind.

10. Greifer (1) nach Anspruch 9,
**dadurch gakennzeichnet, dass**
- das Steuerelement (32) lösbar mit der Steuerwelle (3) verbunden ist und/oder
- die Kontaktkörper (321,322) quaderförmig sind und/oder zumindest eine Stirnfläche (321', 322') mit konvexer Krümmung haben.

11. Greifer (1) nach zumindest einem der vorstehenden Ansprüche,
**dadurch gekennzeichnet, dass**
der Greifer (1) zumindest eine weitere solche Greifzange (2) aufweist, die planparallel beabstandet von der ersten Greifzange (2) in an dem flächigen Steg (10) gelagert ist und nicht mit der ersten Greifzange (2) gekoppelt ist.

12. Greifer (1) nach zumindest einem der Ansprüche 9 bis 11,
**dadurch gekennzeichnet, dass**
die Steuerwelle (3) vom Steuerelement-Ende (34) abgewandt ein zweites Ende (33) hat, das aus der entsprechend anderen der Grundplatten (111,112) hervorragt, und das identisch mit dem Steuerelement-Ende (34) ausgebildet ist, und wobei das abgewandte Ende (33) bevorzugt mit einer Abdeckkappe (5) abgedeckt ist.

13. Greifer (1) nach zumindest einem der vorstehenden Ansprüche,
**dadurch gekennzeichnet, dass**
die planparallel beabstandeten Grundplatten (111,112)
- Befestigungsmittel aufweisen, die dazu ausgebildet sind, den Greifer (1) an einem Transportstern zu befestigen, und/oder
- jeweils einen Schlitz (111',112') haben, der symmetrisch zwischen den Greifarmen (2) positioniert ist und in dem die beiden Enden eines Überstands (10') des flächigen Stegelements (10) aufgenommen sind.

14. Greifer (1) zumindest einem der vorstehenden Ansprüche,
**dadurch gekennzeichnet, dass**
der Greifarm (2) im Bereich des Greiferabschnitts (11) eine Sollbruchstelle (25') oder ein Gelenk (25') aufweist, das/die bei Überschreiten eines vorbestimmten Moments zumindest einen Bewegungsfreiheitsgrad freigibt.

15. Greifer (1) nach zumindest einem der vorstehenden Ansprüche,
**dadurch gekennzeichnet, dass**
die Greifarme (2) oberseitig jeweils einen Nockenfolger (4) aufweisen, an dem der Nocken (31) der Steuerwelle (3) anliegt, wobei der Nockenfolger (4) bevorzugt eine drehbar gelagerte Rolle (4) oder eine Fläche mit einer gleitmindernden und/oder verschleißfesten Beschichtung ist und/oder aus einem trocken-gleitfähigen Werkstoff besteht.

16. Greifer(1) nach zumindest einem der Ansprüche 1 bis 13,
**dadurch gekennzeichnet, dass**
der Greifer (1) eine Synchronisierungsvorrichtung (8) aufweist, bestehend aus einem Umgriffelement (81) und einem Hilfsnocken (82), wobei der Hilfsnocken (82), bevorzugt steuerkreuzseitig, zwischen einer Grundplatte (111,112) und einem ersten Element mit Nockenfunktion (31) drehfest auf der Steuerwelle (3) sitzt, und wobei das Umgriffelement (81) ein J-förmiges Umgriffblech ist, der das Stegelement (10) von dessen rückwärtiger Seite umgreift und an diesem festgelegt ist und das einen langen Schenkel hat, der an dem Hilfsnocken (82) anliegt, oder dass
der Greifer (1) eine Synchronisierungsvorrichtung (8) aufweist, bestehend aus einem Magnetelementepaar, wobei das eine MagnetElement (92) an einer nach innen weisenden Seite einer der Grundplatten (111,112) angeordnet ist und die Steuerwelle (3) zumindest teilweise umgibt und mit dem anderen in Magnetkontakt steht und wobei das andere Magnetelement (91) drehfest auf der Steuerwelle (3) sitzt.

17. Transportstern (100) mit einer ortsfesten Maschinenbasis,
der zumindest einen rotierbaren Tragring aufweist, an dessen Umfang in gleichmäßigen Winkelabständen eine Vielzahl Greifer (1) angeordnet sind, wobei die Steuerelemente (32) der Greifer (1) jeweils in die gleiche Richtung weisen,
und der zumindest eine zu der Maschinenbasis ortsfeste Auslösevorrichtung aufweist, die beim vorbei Bewegen der Greifer (1) die Steuerelemente (32) der Greifer (1) betätigt,
**dadurch gekennzeichnet, dass**
der Greifer ein Greifer (1) nach zumindest einem der Ansprüche 1 bis 16 ist.

18. Transportstern (100) nach Anspruch 17,
**dadurch gekennzeichnet, dass**
die Auslösevorrichtung eine Auslösevorrichtung mit kontinuierlicher Auslösecharakteristik, bevorzugt eine Steuerkontur, oder eine Auslösevorrichtung mit diskreter Auslösecharakteristik, bevorzugt zumindest ein Auslösenocken, eine Rolle und/oder ein Umwerfer ist, der dazu ausgebildet ist, das Steuerelement (32) des Greifers (1) zu betätigen.

19. Greifarm (2), ausgebildet zur paarigen Anordnung mit einem zweiten Greifarm (2) an einem Greifer (1) für eine Gefäßhandhabungsvorrichtung,
**dadurch gekennzeichnet, dass**
der Greifarm (2) einen Schwenkabschnitt (11') und einen Greifabschnitt (11) aufweist, die integral ausgebildet sind, wobei der Schwenkabschnitt (11') einen Federabschnitt (24), insbesondere einen Blattfederabschnitt (24) aufweist, der an seinem freien Ende in der Blattebene eine Umbiegung (24') aufweist, die zur Abstützung eines Fläche eines Abstützelementes vorgesehen ist.

20. Greifarm (2) nach Anspruch 19,
**dadurch gekennzeichnet, dass**
der Schwenkabschnitt (11') an seinem zu dem Greifabschnitt (11) weisenden Ende eine S-förmige Kontur (25) aufweist, die eine Steuerkurve mit einem Endanschlag für ein Element mit Nockenfunktion (31) einer Steuerwelle (3) bildet, das zwischen den beiden S-förmigen Konturen der Schwenkabschnitte (11') zweier paarig angeordneter Greifarme (2) positionierbar ist.

21. Greifzange, die zwei Greifarme (2) aufweist,
**dadurch gekennzeichnet, dass**
jeder Greifarm (2) einen Schwenkabschnitt (11') und einen Greifabschnitt (11) aufweist, die integral ausgebildet sind, und wobei der Schwenkabschnitt (11') einen Federabschnitt (24), insbesondere einen Blattfederabschnitt (24) aufweist, der an seinem freien Ende in der Blattebene eine Umbiegung (24') aufweist, die gegen ein flächiges Element abstützbar ist,
wobei der Schwenkabschnitt (11') an seinem zu dem Greifabschnitt (11) weisenden Ende eine S-förmige Kontur aufweist,
und wobei
ein u-förmiger Verbindungsabschnitt die Federabschnitte (24) der beiden Greifarme (2) verbindet.
